(19) Europäisches Patentamt
European Patent Office
Office européen des brevets

(11) **EP 3 021 495 B1**

(12) **EUROPEAN PATENT SPECIFICATION**

(45) Date of publication and mention
of the grant of the patent:
**10.07.2019 Bulletin 2019/28**

(21) Application number: **14798349.8**

(22) Date of filing: **19.05.2014**

(51) Int Cl.:
*H04B 7/04* *(2017.01)*    *H04L 25/03* *(2006.01)*

(86) International application number:
**PCT/CN2014/077812**

(87) International publication number:
**WO 2014/183681 (20.11.2014 Gazette 2014/47)**

(54) **BASE STATION, TERMINAL AND INTERFERENCE SUPPRESSION METHOD AND DEVICE**

BASISSTATION, ENDGERÄT SOWIE INTERFERENZUNTERDRÜCKUNGSVERFAHREN UND -VORRICHTUNG

STATION DE BASE, TERMINAL ET PROCÉDÉ ET DISPOSITIF DE SUPPRESSION D'INTERFÉRENCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.07.2013 CN 201310289272**

(43) Date of publication of application:
**18.05.2016 Bulletin 2016/20**

(73) Proprietor: **ZTE Corporation**
**Guangdong Province 518057 (CN)**

(72) Inventors:
• **XU, Ying**
**Shenzhen,**
**Guangdong Province 518057 (CN)**
• **WEN, Anping**
**Shenzhen,**
**Guangdong Province 518057 (CN)**

(74) Representative: **Novagraaf Technologies**
**Bâtiment O2**
**2, rue Sarah Bernhardt**
**CS90017**
**92665 Asnières-sur-Seine Cedex (FR)**

(56) References cited:
**CN-A- 101 330 358       CN-A- 102 480 314**
**US-A- 6 128 355         US-A1- 2006 153 283**
**US-A1- 2007 127 608     US-A1- 2008 159 560**
**US-A1- 2012 108 194     US-A1- 2013 163 529**

## Description

## Technical Field

The disclosure relates to the baseband receiving technology, and in particular to a base station, a terminal and a method and device for an interference rejection.

## Background

With the development of data service, there are more and more users with high throughput and high transmitting power, and these users cause great interferences to other uses. More denser base stations also cause interference between neighbouring base stations to become greater and greater.

Performing Interference Rejection Combining (IRC) on a diversity signal can reject these greater interference sources. The IRC algorithm is broadly separated into a non-blind interference rejection with one or more known interference sources and a blind interference rejection with one or more unknown interference sources. The non-blind interference rejection is using the information of the one or more known interference source to reject the one or more known interference source, including a combining method based on maximizing a Signal-to-Interference-pulse-Noise Ratio (SINR), and a combining method based on minimum mean square error. The blind interference rejection is rejecting one or more interference sources in a situation where the information of the one or more interference sources are unknown, including a method of using an estimated correlation matrix of a reception signal to compute a combining weight based on a principle of minimum mean square error, or a method of using an estimated interference-plus-noise correlation matrix to compute the combining weight based on a principle of maximizing the SINR.

When the one or more interference sources are known, the non-blind interference rejection can usually get optimal performance; when the one or more interference source are unknown, the blind interference rejection is better than the non-blind interference rejection.

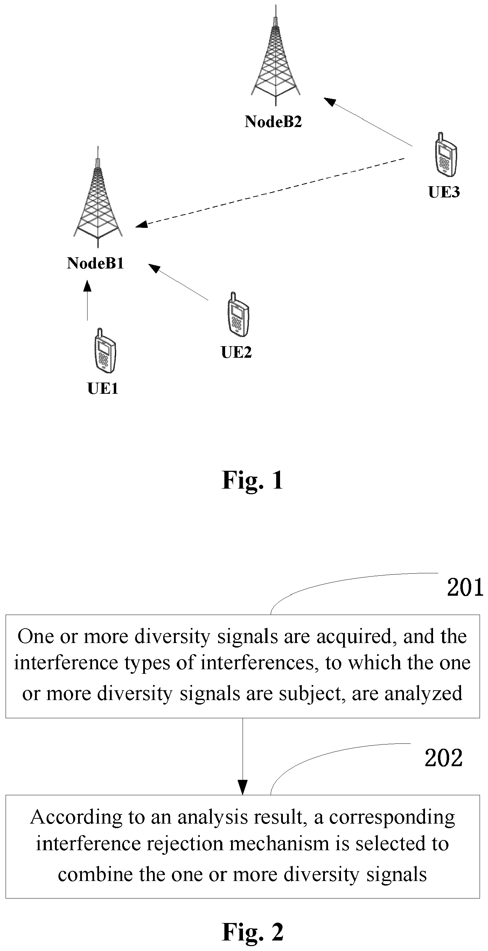

However, in a real system, there are usually more than one interference sources, and these interference sources change dynamically. The information of part of these interference sources are known, and the information of other part of these interference sources are known, so that whole interference characteristic is between known and unknown. As shown in Fig. 1, a UE1 and a UE2 belong to a base station 1, and a UE3 belongs to a base station 2. For the UE1, the information of the UE2 is comparatively easy to obtain, so the UE2 belongs to a known interference source; the information of the UE3 is hard to obtain, so the UE3 belongs to an unknown interference source. In addition, the interference between different systems also belongs to unknown interference, e.g. the interference of a GSM user to an UMTS user. A complex interference environment makes it difficult to make an appropriate use of an interference rejection method to get the optimal performance.

US 2006/153283 A1 discloses an interference cancellation in adjoint operators for communication receivers; US 2007/127608 A1 discloses a blind interference mitigation in a digital receiver. US 2012/108194 A1 discloses a method and arrangement for interference mitigation. US 6128355 A discloses a selective diversity combing. US 2013/163529 A1 discloses methods and apparatus for assignment dependent downlink channel processing for wireless networks. However the above-mentioned problems remain unsolved.

## Summary

The embodiments of the disclosure provide a base station, a terminal and a method and device for an interference rejection, which can enhance the effect of interference rejection.

According to an aspect of the disclosure, a method for an interference rejection is provided, which includes the following steps:

acquiring one or more diversity signals, and analyzing interference types of interferences to which the one or more diversity signals are subject; and selecting, according to an analysis result, a corresponding interference rejection mechanism to combine the one or more diversity signals.

In an example embodiment, selecting, according to the analysis result, the corresponding interference rejection mechanism to combine the one or more diversity signals comprises: selecting, according to the analysis result, a blind interference rejection or a non-blind interference rejection to combine the one or more diversity signals; or using, according to the analysis result, both a non-blind interference rejection and a blind interference rejection to combine the one or more diversity signals.

In an example embodiment, selecting, according to the analysis result, the corresponding interference rejection mechanism to combine the one or more diversity signals comprises: selecting, according to the analysis result, one of two combining mechanisms to combine the one or more diversity signals, wherein the first combining mechanism of the two combining mechanisms is to select a blind interference rejection or a non-blind interference rejection to combine the one or more diversity signals; and the second combining mechanism of the two combining mechanisms is to use both the non-blind interference rejection and the blind interference rejection to combine the one or more diversity signals.

In an example embodiment, analyzing the interference types of the interferences towhich the one or more diversity signals are subject comprises: analyzing the interference types of the interferences, to which the one or more diversity signals are subject, according to a proportion of interferences whose interference types are known interference in the interferences and a proportion of interferences whose interference types are unknown interference in the interferences.

In an example embodiment, analyzing the interference types of the interferences, to which the one or more diversity signals are subject, according to the proportion of the interferences whose interference types are known interference in the interferences and a proportion of interferences whose interference types are unknown interference in the interferences comprises: directly estimating a covariance matrix of the one or more diversity signals or directly estimating an interference-plus-noise covariance matrix of the one or more diversity signals; constructing a theoretical covariance matrix of the one or more diversity signals or a theoretical interference-plus-noise covariance matrix of the one or more diversity signals; computing an estimation error of the directly estimated covariance matrix, and computing an error between the theoretical covariance matrix and the directly estimated covariance matrix; and analyzing, according to the estimation error of the directly estimated covariance matrix and the error between the theoretical covariance matrix and the directly estimated covariance matrix, the interference types of the interferences, to which the one or more diversity signals are subject, according to the proportion of the interferences whose interference types are known interference in the interferences and a proportion of interferences whose interference types are unknown interference in the interferences.

In an example embodiment, analyzing, according to the estimation error of the directly estimated covariance matrix and the error between the theoretical covariance matrix and the directly estimated covariance matrix, the interference types of the interferences, to which the one or more diversity signal are subject, according to the proportion of the interferences whose interference types are known interference in the interferences and a proportion of interferences whose interference types are unknown interference in the interferences comprises: judging whether the proportion of the known interference is greater than the proportion of the unknown interference in the interferences, to which the one or more diversity signals are subject, by comparing the estimation error of the directly estimated covariance matrix with the error between the theoretical covariance matrix and the directly estimated covariance matrix; or according to the estimation error of the directly estimated covariance matrix and the error between the theoretical covariance matrix and the directly estimated covariance matrix, directly computing the proportion of the known interferences and the proportion of the unknown interferences in the interferences to which the one or more diversity signals are subject; according to the analysis result, using the blind interference rejection or the non-blind interference rejection to combine the one or more diversity signals comprises: according to a judgment result, using the non-blind interference rejection or the blind interference rejection to combine the one or more diversity signals; using, according to the analysis result, both the non-blind interference rejection and the blind interference rejection to combine the one or more diversity signals comprises: using the non-blind interference rejection and the blind interference rejection to respectively combine the diversity signal; combining, according to the proportion of the known interferences and the proportion of the unknown interferences in the interferences to which the one or more diversity signals are subject, a result of combing the one or more diversity signals using the non-blind interference rejection receiver and a result of combing the one or more diversity signals using the blind interference rejection receiver to combine results of the one or more diversity signals; selecting, according to the analysis result, one of the following two combining mechanisms to combine the one or more diversity signals comprises: selecting, according to the proportion of the known interferences and the proportion of the unknown interferences in the interferences to which the one or more diversity signals are subject, one of the following two combining mechanisms to combine the one or more diversity signals, wherein the first combining mechanism of the two combining mechanisms is to select, according to the proportion of the known interferences and the proportion of the unknown interferences in the interferences to which the one or more diversity signals are subject, the blind interference rejection or the non-blind interference rejection to combine the one or more diversity signals; and the second combining mechanism of the two combining mechanisms is to use the non-blind interference rejection and the blind interference rejection to respectively combine the one or more diversity signals; and combining, according to the proportion of the known interferences and the proportion of the unknown interferences in the interferences to which the one or more diversity signals are subject, a result of combing the one or more diversity signals using the non-blind interference rejection receiver and a result of combing the one or more diversity signals using the blind interference rejection receiver to combine results of the one or more diversity signals.

In an example embodiment, constructing the theoretical covariance matrix of the one or more diversity signals or the theoretical interference-plus-noise covariance matrix of the one or more diversity signals comprises: using a control channel in each of the one or more diversity signals to compute a diversity channel fading coefficient; using the diversity channel fading coefficient to deduce the theoretical covariance matrix of the one or more diversity signals or the theoretical interference-plus-noise covariance matrix of the one or more diversity signals; or using a pilot signal or a reference signal in each diversity signal to compute a channel fading coefficient on each subcarrier of each diversity signal; using the channel fading coefficient to deduce the theoretical covariance matrix of the one or more diversity signals or the theoretical interference-plus-noise covariance matrix of the one or more diversity signals.

According to another aspect of the disclosure, a device for interference reject is also provided, which includes: a diversity receiving component, an interference analyzing component and a diversity combining component;

the diversity receiving component is configured to acquire one or more diversity signals; the interference analyzing component is configured to analyze the interference types of interferences to which the one or more diversity signals are subject; and the diversity combining component is configured to, according to an analysis result of the interference analyzing component, select a corresponding interference rejection mechanism to combine the one or more diversity signals.

In an example embodiment, the diversity combining component comprises: a blind interference rejection component, a non-blind interference rejection component and a combination control component; the blind interference rejection component is configured to use a blind interference rejection manner to combine the one or more diversity signals under the control of the combination control component; the non-blind interference rejection component is configured to use a non-blind interference rejection manner to combine the one or more diversity signals under the control of the combination control component; and the combination control component is configured to control the blind interference rejection component or the non-blind interference rejection component to combine the one or more diversity signals according to the analysis result, or use both the non-blind interference rejection component and the blind interference rejection component to combine the one or more diversity signals according to the analysis result.

In an example embodiment, the diversity combining component comprises: a selecting component, a first combining mechanism component and a second combining mechanism component; the selecting component is configured to select the first combining mechanism component or the second combining mechanism component to combine the one or more diversity signals according to the analysis result; the first combining mechanism component is configured to use the blind interference rejection or the non-blind interference rejection to combine the one or more diversity signals; and the second combining mechanism component is configured to use both the non-blind interference rejection and the blind interference rejection to combine the one or more diversity signals.

In an example embodiment, the interference analyzing component is configured to analyze the proportion of the interferences whose interference types are known interference and unknown interference in the interferences to which the one or more diversity signals are subject.

In an example embodiment, the interference analyzing component comprises: a covariance matrix estimating component, a theoretical covariance matrix constructing component, an error computing component, a comparing component and a proportion analyzing component; the covariance matrix estimating component is configured to directly estimate a covariance matrix of the one or more diversity signals or directly estimate an interference-plus-noise covariance matrix of the one or more diversity signals; the theoretical covariance matrix constructing component is configured to construct a theoretical covariance matrix of the one or more diversity signals or a theoretical interference-plus-noise covariance matrix of the one or more diversity signals; the error computing component is configured to compute an estimation error of the directly estimated covariance matrix, and compute an error between the theoretical covariance matrix and the directly estimated covariance matrix; the comparing component is configured to compare the estimation error of the directly estimated covariance matrix with the error between the theoretical covariance matrix and the directly estimated covariance matrix; and the proportion analyzing component is configured to, according to the estimation error of the directly estimated covariance matrix and the error between the theoretical covariance matrix and the directly estimated covariance matrix, analyze the interference types of the interferences, to which the one or more diversity signals are subject, according to the proportion of the interferences whose interference types are known interference in the interferences and a proportion of interferences whose interference types are unknown interference in the interferences.

In an example embodiment, the proportion analyzing component is configured to judge whether the proportion of the known interferences is greater than the proportion of the unknown interference in the interferences, to which the one or more diversity signals are subject, by comparing the estimation error of the directly estimated covariance matrix with the error between the theoretical covariance matrix and the directly estimated covariance matrix, or according to the estimation error of the directly estimated covariance matrix and the error between the theoretical covariance matrix and the directly estimated covariance matrix, directly compute the proportion of the known interferences and the proportion of the unknown interferences in the interferences to which the one or more diversity signals are subject; the combination control component is configured to control the blind interference rejection component or the non-blind interference rejection component to combine the one or more diversity signals according to a judgment result of the proportion analyzing component, or control the blind interference rejection component and the non-blind interference rejection component to respectively combine the one or more diversity signals, and combine a result of combining the one or more diversity signals using a non-blind interference rejection receiver with a result of combining the one or more diversity signals using a blind interference rejection receiver according to the proportion of the known interferences and the proportion of the unknown interferences in the interferences to which the one or more diversity signals are subject; the selecting component is configured to select the first combining mechanism component or the second combining mechanism component to combine the one or more diversity signals according to the proportion of the known interferences and the proportion of the unknown interferences in the interferences to which the one or more diversity signals are subject; the first combining mechanism component is configured to, according to the proportion of the known interferences and the proportion of the unknown interferences in the interferences to which the one or more diversity signals are subject, select the blind interference rejection or the non-blind interference rejection to combine the one or more diversity signals; and the second combining mechanism component is configured to use the non-blind interference rejection and the blind interference rejection to respectively combine the one or more diversity signals, and according to the proportion of the known interferences and the proportion of the unknown interferences in the interferences to which the one or more diversity signals are subject, combine a result of combing the one or more diversity signals using the non-blind interference rejection receiver with a result of combing the one or more diversity signals using the blind interference rejection receiver.

In an example embodiment, the theoretical covariance matrix constructing component is configured to use a control channel in each of the one or more diversity signals to compute a diversity channel fading coefficient, and then use the diversity channel fading coefficient to deduce the theoretical covariance matrix of the one or more diversity signals or the theoretical interference-plus-noise covariance matrix of the one or more diversity signals, or use a pilot signal or a reference signal in each diversity signal to compute a channel fading coefficient on each subcarrier of each diversity signal, and then use the channel fading coefficient to deduce the theoretical covariance matrix of the one or more diversity signals or the theoretical interference-plus-noise covariance matrix of the one or more diversity signals.

According to another aspect of the disclosure, a base station is also provided, which includes at least two antennas and a processor;
each of the at least two antennas is configured to receive an external signal and convert the received signal to an antenna signal; and the processor is configured to acquire one or more diversity signals according to one or more antenna signals received by the at least two antennas, analyze the interference types of interferences to which the one or more diversity signals are subject, and according to an analysis result, select a corresponding interference rejection mechanism to combine the one or more diversity signals.

In an example embodiment, the processor is configured to select a blind interference rejection or a non-blind interference rejection to combine the one or more diversity signals according to the analysis result, or use both the non-blind interference rejection and the blind interference rejection to combine the one or more diversity signals according to the analysis result.
In an example embodiment, the processor is configured to, according to the analysis result, select one of following two combining mechanisms to combine the diversity signal, wherein: the first combining mechanism of the two combining mechanisms is to select a blind interference rejection or a non-blind interference rejection to combine the one or more diversity signals; the second combining mechanism of the two combining mechanisms is to use both the non-blind interference rejection and the blind interference rejection to combine the one or more diversity signals.
Likewise, for solving the above technical problems, a terminal is also provided, which includes at least two antennas and a processor;
each of the at least two antennas is configured to receive an external signal and convert the received signal to an antenna signal; and the processor is configured to acquire one or more diversity signals according to one or more antenna signals received by the at least two antennas, analyze the interference types of interferences to which the one or more diversity signals are subject, and according to an analysis result, select a corresponding interference rejection mechanism to combine the one or more diversity signals.
In an example embodiment, the processor is configured to select a blind interference rejection or a non-blind interference rejection to combine the one or more diversity signals according to the analysis result, or use both a non-blind interference rejection and a blind interference rejection to combine the one or more diversity signals according to the analysis result.
In an example embodiment, the processor is configured to, according to the analysis result, select one of following two combining mechanisms to combine the one or more diversity signals, wherein: the first combining mechanism of the two combining mechanisms is to select a blind interference rejection or a non-blind interference rejection to combine the one or more diversity signals; the second combining mechanism of the two combining mechanisms is to use both the non-blind interference rejection and the blind interference rejection to combine the one or more diversity signals.
The beneficial effects of above embodiments of the disclosure are that:
the disclosure provides a base station, a terminal and a method and device for an interference rejection, which can enhance the interference rejection effect. The interference rejection method of the disclosure includes that: the diversity signal is acquired, and the interference types of interferences to which the diversity signal is subject are analyzed; and according to the analysis result, the corresponding interference rejection mechanism is selected to combine the diversity signal; by selecting the different interference rejection mechanisms to combine the diversity signal according to the different interference types of the interferences to which the diversity signal is subject, compared with the related art, the method of the disclosure can expand the application scope of interference rejection combination, and get the optimal performance under complex and dynamic interference environments, thereby greatly enhancing the interference rejection effect.

## Brief Description of the Drawings

Fig. 1 is a schematic diagram of user interference;
Fig. 2 is a flowchart of a method for an interference rejection according to the first embodiment of the disclosure;
Fig. 3 is a structural schematic diagram of a device for an interference rejection according to the first embodiment of the disclosure;
Fig. 4 is a structural schematic diagram of another device for an interference rejection according to the first embodiment of the disclosure;
Fig. 5 is a flowchart of analyzing a proportion of known interference and a proportion of unknown interference according to the first embodiment of the disclosure;
Fig. 6 is a schematic diagram of computing a combining weight according to the first embodiment of the disclosure;
Fig. 7 is a schematic diagram of acquiring a diversity signal in a Code Division Multiple Access (CDMA) system according to the first embodiment of the disclosure;
Fig. 8 is a schematic diagram of acquiring the diversity signal in a Frequency Division Multiple Access (FDMA) system and an Orthogonal Frequency Division Multiplexing (OFDM) system according to the first embodiment of the disclosure;
Fig. 9 is a flowchart of a method for an interference rejection in the CDMA system according to the second embodiment of the disclosure;
Fig. 10 is an effect simulation diagram of an interference rejection combination according to the second embodiment of the disclosure;
Fig. 11 is an effect simulation diagram of an interference rejection to an unknown interference user according to the second embodiment of the disclosure;
Fig. 12 is an effect simulation diagram of an interference rejection to a known interference user according to the second embodiment of the disclosure;
Fig. 13 is a flowchart of an interference rejection in the FDMA system or the OFDM system according to the third embodiment of the disclosure;
Fig. 14 is a structural schematic diagram of a device for an interference rejection according to the fourth embodiment of the disclosure;
Fig. 15 is a structural schematic diagram of another device for an interference rejection according to the fourth embodiment of the disclosure;
Fig. 16 is a structural schematic diagram of another device for an interference rejection according to the fourth embodiment of the disclosure;
Fig. 17 is a structural schematic diagram of an interference analyzing component according to the fourth embodiment of the disclosure;
Fig. 18 is a structural schematic diagram of a base station according to the fifth embodiment of the disclosure; and
Fig. 19 is a structural schematic diagram of a terminal according to the sixth embodiment of the disclosure.

## Detailed Description of Embodiments

The disclosure is described below with reference to the accompanying drawings and embodiments in detail.

Embodiment 1

As shown in Fig. 2, the present embodiment provides a method for an interference rejection, which includes the following steps:

Step 201: one or more diversity signals are acquired, and the interference types of interferences, to which the one or more diversity signals are subject, are analyzed; and
Step 202: according to an analysis result, a corresponding interference rejection mechanism is selected to combine the one or more diversity signals.

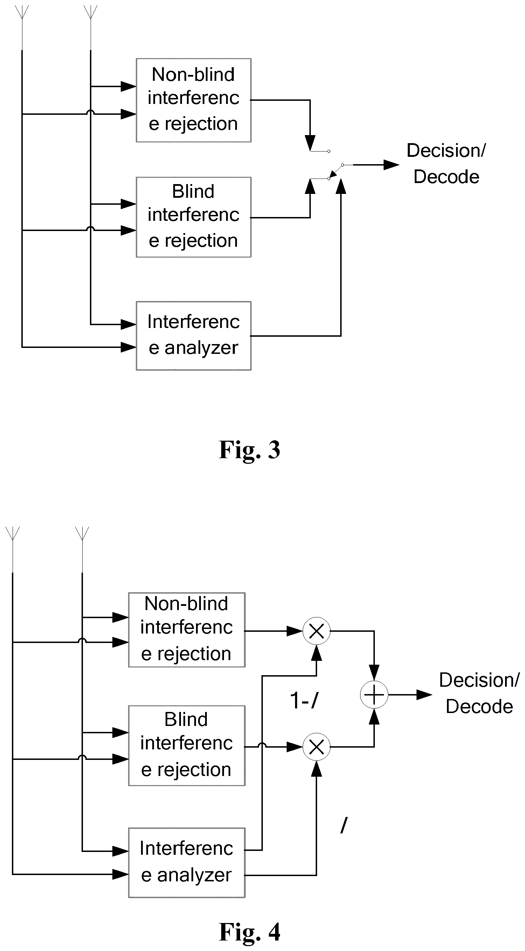

The method for the interference rejection of the present embodiment can select the corresponding interference rejection mechanism to combine the one or more diversity signals according to the change of the interferences to which the one or more diversity signals are subject, so the method has a great effect of rejecting one or more dynamically changing interference sources.
In the present embodiment, in a situation where information of one or more interference sources is known, the interference type is known interference, and in a situation where the information of one or more interference sources is unknown, the interference type is unknown interference; in a real system, the one or more interference sources change dynamically, that is, a part of the information of the one or more interference sources is known, and another part of the information of the one or more interference sources is unknown, then the interferences to which the one or more diversity signals are subject include the known interference and the unknown interference.
The process of selecting the corresponding interference rejection mechanism to combine the one or more diversity signals according to the analysis result in Step 202 of the present embodiment may include three situations.
The first situation is according to the analysis result, to select blind interference rejection or non-blind interference rejection to combine the one or more diversity signals. The present embodiment can select the blind interference rejection or the non-blind interference rejection to combine the one or more diversity signals by analyzing the interference types of the interferences. As the device for the interference rejection shown in Fig. 3, when all the interference types of the interferences, to which the one or more diversity signal are subject, are the known interference, a non-blind interference rejection receiver is selected to combine the one or more diversity signals; when all the interference types of the interferences, to which the one or more diversity signals are subject, are the unknown interference, a blind interference rejection receiver is selected to combine the one or more diversity signals; when a part of the interferences, to which the one or more diversity signals are subject, are the unknown interferences, and another part of the interferences are the known interferences, a corresponding interference rejection receiver is selected to combine the one or more diversity signals according to a proportion of the two interference types; for example, when the unknown interferences account for 60%, and the known interferences account for 40%, the blind interference rejection receiver is selected to combine the one or more diversity signals. In this situation, the method of the present embodiment can alternatively use the non-blind interference rejection receiver and the blind interference rejection receiver in real time to combine the one or more diversity signals according to the change of one or more dynamic interference signals, so as to select a suitable receiver to combine the one or more diversity signals, thereby providing the rejection effect.

The second situation is according to the analysis result, combining the non-blind interference rejection and the blind interference rejection to combine the one or more diversity signals. The method for the interference rejection includes that: the one or more diversity signals is acquired, and the interference types of the interferences, to which the one or more diversity signals are subject, are analyzed; and according to the analysis result, the non-blind interference rejection is combined with the blind interference rejection to combine the one or more diversity signals.

In the present embodiment, combining the non-blind interference rejection with the blind interference rejection to combine the one or more diversity signals includes that: the non-blind interference rejection and the blind interference rejection are respectively used for combining the one or more diversity signals, and then results, which are obtained by using the non-blind interference rejection and the blind interference rejection to respectively combine the one or more diversity signals, are combined according to the analysis result. As the device for the interference rejection shown in Fig. 4, after the one or more diversity signals are acquired through one or more antennas, an interference analyzer analyzes the interference types of the interferences to which the one or more diversity signal are subject, meanwhile, the non-blind interference rejection receiver and the blind interference rejection receiver respectively combine the acquired diversity signals, and two receivers respectively obtain soft symbols after combination, and then the combination control component will combine the soft symbols obtained by the two receivers according to the analysis result to obtain final soft symbols for decision or decoding. In this situation, the method of the present embodiment can use a combination of the non-blind interference rejection receiver and the blind interference rejection to combine the diversity signal, so as to achieve the best interference rejection effect.

The third situation is according to the analysis result, selecting one of the following two combining mechanisms to combine the one or more diversity signals;
the first combining mechanism is: selecting the blind interference rejection or the non-blind interference rejection to combine the one or more diversity signals; and
the second combining mechanism is: combining the non-blind interference rejection with the blind interference rejection to combine the one or more diversity signals.

In this situation, the method for the interference rejection of the present embodiment provides two combining mechanisms, so it is feasible to select a suitable combining mechanism to combine the one or more diversity signals; the method can select a reasonable combining mechanism in real time to combine the one or more diversity signals when one or more interference sources signal change, so the method has a great effect of rejecting the dynamically changing interference sources.

The first combining mechanism in the third situation of the present embodiment is same as selecting the blind interference rejection or the non-blind interference rejection to combine the one or more diversity signals in the first situation, and the second combining mechanism is same as combining the non-blind interference rejection with the blind interference rejection to combine the one or more diversity signals in the second situation, and a specific combining process can refer to the related description of the first situation and the second situation.

In an example embodiment, analyzing the interference types of the interferences, to which the one or more diversity signal are subject, in Step 201 of the present embodiment includes that: the proportion of the interferences whose interference types are known interference and unknown interference in the interferences, to which the one or more diversity signals are subject, is analyzed.

The method for the interference rejection of the present embodiment first analyzes characteristics of the interferences to which the one or more diversity signal are subject, mainly analyzes the proportion of the unknown interferences and the proportion of the known interferences in all the interferences, and then uses the corresponding combination of the non-blind interference rejection receiver and the blind interference rejection receiver to combine the one or more diversity signals according to the analysis result. For example, in a situation where it is analyzed that all information of interferences, to which the one or more diversity signal are subject, is known, and all the interference types of the interferences, to which the one or more diversity signals are subject, are known interferences, when the method of the first situation is used, it is feasible to select a manner of the non-blind interference rejection to combine the one or more diversity signals; when the method of the second situation is used, it is feasible to firstly select the non-blind interference rejection receiver and the blind interference rejection receiver to respectively combine the one or more diversity signal, and then combine the two soft symbols after combination according to the proportion of the known interferences and the proportion of the unknown interferences; when the method of the third situation is used, it is feasible to preferably select the first combining mechanism according to the proportion of the known interferences and the proportion of the unknown interferences, namely the non-blind interference rejection receiver is selected to combine the one or more diversity signals, or select the second combining mechanism, namely the non-blind interference rejection receiver and the blind interference rejection receiver are firstly selected to combine the one or more diversity signals respectively, and then the two soft symbols after combination are combined according to the proportion of the known interferences and the proportion of the unknown interferences.

In a situation where it is analyzed that all information of the interferences, to which the one or more diversity signals, are subject is known, when the method of the first situation is used, it is feasible to select the manner of blind interference rejection to combine the one or more diversity signals; when the method of the second situation is used, it is feasible to first select the non-blind interference rejection receiver and the blind interference rejection receiver to respectively combine the one or more diversity signals, and then combine the two soft symbols after combination according to the proportion of the known interferences and the proportion of the unknown interferences; when the method of the third situation is used, it is feasible to preferably select the first combining mechanism according to the proportion of the known interferences and the proportion of the unknown interferences, namely the non-blind interference rejection receiver is selected to combine the one or more diversity signals, or select the second combining mechanism, namely first the non-blind interference rejection receiver and the blind interference rejection receiver are selected to respectively combine the diversity signal, and then the two soft symbols after combination are combined according to the proportion of the known interferences and the proportion of the unknown interferences.

When it is analyzed that the information of the one or more interference sources, to which the one or more diversity signals are subject, includes known information of interference sources and unknown information of interference sources, the interference type is compound interference, namely the interferences, to which the one or more diversity signals are subject, include the unknown interferences and the known interferences; when the method of the first situation is used, it is feasible to compare the proportion of the unknown interferences with the proportion of the known interferences, and then select a receiver corresponding to the interference type with the greater proportion to combine the one or more diversity signals; for example, when the proportion of the unknown interferences is greater than the proportion of the known interferences, the blind interference rejection receiver can be used for combining the one or more diversity signals; when the method of the second situation is used, it is feasible to first use the non-blind interference rejection receiver and the blind interference rejection receiver to respectively combine the one or more diversity signals, and then combine the two soft symbols after combination according to the proportion of the known interferences and the proportion of the unknown interferences (e.g. the known interferences account for 60%, and the unknown interferences account for 40%); when the method of the third situation is used, it is feasible to preferably select the first combining mechanism according to the proportion of the known interferences and the proportion of the unknown interferences, namely the non-blind interference rejection receiver or the non-blind interference rejection receiver is selected to combine the one or more diversity signals (e.g. the known interferences account for 60%, and the unknown interferences account for 40%), or select the second combining mechanism is selected, namely first the non-blind interference rejection receiver and the blind interference rejection receiver are selected to respectively combine the one or more diversity signals, and then the two soft symbols after combination are combined according to the proportion of the known interferences and the proportion of the unknown interferences (e.g. the known interferences account for 60%, and the unknown interferences account for 40%).

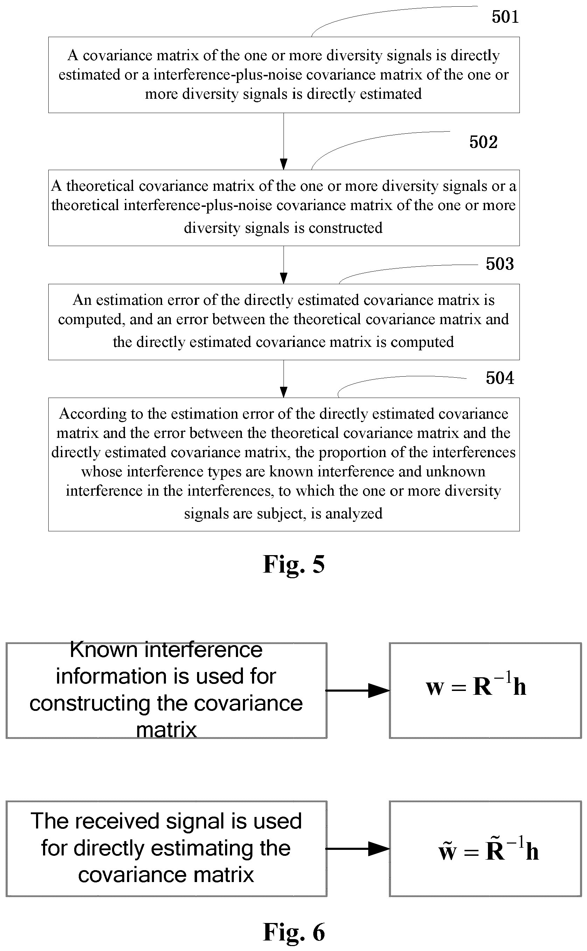

As shown in Fig. 5, the way of analyzing the proportion of the known interferences and the proportion of the unknown interferences in the interferences, to which the one or more diversity signals are subject, may include the following steps.

Step 501: a covariance matrix of the one or more diversity signals is directly estimated or an interference-plus-noise covariance matrix of the one or more diversity signals is directly estimated.

Step 502: a theoretical covariance matrix of the one or more diversity signals or a theoretical interference-plus-noise covariance matrix of the one or more diversity signals is constructed.

There are following two modes of constructing the theoretical covariance matrix.

The first constructing mode is that:
the control channel in each of the one or more diversity signals is used for computing a diversity channel fading coefficient; the diversity channel fading coefficient is used for deducing the theoretical covariance matrix of the one or more diversity signals or the theoretical interference-plus-noise covariance matrix of the one or more diversity signals. For example, in the CDMA system, the directly estimated covariance matrix is estimated by using a space diversity reception signal and a time diversity reception signal. Constructing the theoretical covariance matrix includes that: first the control channel in each diversity reception signal is used for computing each diversity channel fading coefficient, and then the channel fading coefficient is used for deducing the covariance matrix or the interference-plus-noise covariance matrix of the received diversity signal.

The second constructing mode is that:
a pilot signal or a reference signal in each diversity signal is used for computing the channel fading coefficient on each subcarrier of each diversity signal; the channel fading coefficient is used for deducing the theoretical covariance matrix of the one or more diversity signals or the theoretical interference-plus-noise covariance matrix of the one or more diversity signals. For example, in the FDMA system and the OFDM system, the directly estimated covariance matrix is estimated by using a space diversity signal on each subcarrier or frequency point. Constructing the theoretical covariance matrix includes that: first the pilot signal or the reference signal in each received diversity signal is used for computing each diversity channel fading coefficient on each subcarrier, and then the channel fading coefficient is used for deducing the covariance matrix or the interference-plus-noise covariance matrix of the received diversity signal.

Step 503: an estimation error of the directly estimated covariance matrix is computed, and an error between the theoretical covariance matrix and the directly estimated covariance matrix is computed.

Step 504: according to the estimation error of the directly estimated covariance matrix and the error between the theoretical covariance matrix and the directly estimated covariance matrix, the proportion of the interferences whose interference types are known interference and unknown interference in the interferences, to which the one or more diversity signals are subject, is analyzed.

In Step 504 of the present embodiment, the specific process of analyzing the proportion of the interferences whose interference types are known interference and unknown interference in the interferences, to which the one or more diversity signals are subject, according to the estimation error of the directly estimated covariance matrix and the error between the theoretical covariance matrix and the directly estimated covariance matrix includes two modes;
the first analyzing mode is that: the estimation error of the directly estimated covariance matrix is compared with the error between the theoretical covariance matrix and the directly estimated covariance matrix, and it is judged whether the proportion of the known interferences is greater than the proportion of the unknown interference in the interferences to which the proportion diversity signals are subject;
for example, an error a of the directly estimated covariance of the one or more diversity signals is computed;
an error b between the theoretical covariance of the one or more diversity signals and the directly estimated covariance of the one or more diversity signals is computed;
it is judged whether the proportion of the known interferences is greater than the proportion of the unknown interference in the interferences to which the one or more diversity signals are subject by comparing a with b;
the second analyzing mode is that: according to the estimation error of the directly estimated covariance matrix and the error between the theoretical covariance matrix and the directly estimated covariance matrix, the proportion of the known interferences and the proportion of the unknown interferences in the interferences, to which the one or more diversity signals are subject, are directly computed.

Aiming at the first analyzing mode:

in the interference rejection method of the first situation, the step of using the blind interference rejection or the non-blind interference rejection to combine the one or more diversity signals according to the analysis result includes that:
according to the judgment result, the non-blind interference rejection or the blind interference rejection is used for combining the one or more diversity signals.

For example, when the known interferences account for 60% and the unknown interferences account for 40%, it is determined that the proportion of the known interferences is greater than the proportion of the unknown interferences, then the manner of non-blind interference rejection is selected to combine the one or more diversity signals.

Aiming at the second analyzing mode:
in the interference rejection method of the second situation, the step of combining the non-blind interference rejection receiver with the blind interference rejection receiver to combine the one or more diversity signals according to the analysis result includes that:

the non-blind interference rejection and the blind interference rejection are used for combining the one or more diversity signals respectively;
according to the proportion of the known interferences and the proportion of the unknown interferences in the interferences to which the one or more diversity signals are subject, the non-blind interference rejection receiver is combined with the blind interference rejection receiver to combine the results of the one or more diversity signals.

For example, the non-blind interference rejection receiver and the blind interference rejection receiver are used for respectively combining the received diversity signal to obtain the soft symbols after combination; when the known interferences account for 60% and the unknown interferences account for 40%, the soft symbols, after two receivers are combined, are combined according to the proportion to obtain final soft symbols for decision or decoding.

In the method for the interference rejection of the third situation, the step of selecting one of the following two combining mechanisms to combine the one or more diversity signals according to the analysis result includes that:

one of the following two combining mechanisms is selected to combine the one or more diversity signals according to the proportion of the known interferences and the proportion of the unknown interferences in the interferences to which the one or more diversity signal are subject; for example, when the known interferences account for 90% and the unknown interferences account for 10%, the first combining mechanism is selected to combine the one or more diversity signals; when the known interferences account for 60% and the unknown interferences account for 40%, the second combining mechanism is selected to combine the one or more diversity signals.

The first combining mechanism in the third situation is specifically: according to the proportion of the known interferences and the proportion of the unknown interferences in the interferences to which the one or more diversity signals are subject, selecting the blind interference rejection and the non-blind interference rejection to combine the one or more diversity signals; for example, when the known interferences account for 90% and the unknown interferences account for 10%, the non-blind interference rejection receiver is selected to combine the received diversity signal, and the soft symbols after combination are obtained for decision or decoding.

The second combining mechanism in the third situation is specifically: using the non-blind interference rejection and the blind interference rejection to respectively combine the one or more diversity signals; according to the proportion of the known interferences and the proportion of the unknown interferences in the interferences to which the one or more diversity signals are subject, combining the non-blind interference rejection receiver with the blind interference rejection receiver to combine the results of the one or more diversity signals. For example, the non-blind interference rejection receiver and the blind interference rejection receiver are used for respectively combining the received diversity signal, the soft symbols after combination are obtained, and the two soft symbols are combined according to the proportion of the known interferences and the proportion of the unknown interferences to obtain the final soft symbols for decision or decoding.

The specific process of analyzing the proportion of the known interferences and the proportion of the unknown interferences in the interferences, to which the one or more diversity signals are subject in the present embodiment is described below in detail:

The received diversity signal can be used for directly estimating the covariance matrix or the interference-plus-noise covariance matrix of the received diversity signal:

$$V(t) = \left[ x1(t)x2(t)\cdots x_N(t) \right]^T$$

$$\widetilde{R} = \frac{1}{L}\sum_{l=0}^{L-1} V(t+lT)V^H(t+lT)$$

wherein, a superscript T denotes a transposition, and a superscript H denotes a Hamiltonian transposition; V(t) is a column vector composed of the received signals on all the diversities or interference-plus-noise at the moment t; L is an average length. For the CDMA system, V(t) is chips or symbols on all RAKE fingers, T is a chip period or a symbol period; for the FDMA system and the OFDM system, V(t) is a space diversity symbol on a certain subcarrier at the moment t, and T is an FDMA or OFDM symbol period. Because $\widetilde{R}$ is an average of time, $\widetilde{R}$ has an estimation error because of being influenced by the average length. The longer the average length is, the smaller the error is. The covariance matrix or the interference-plus-noise covariance matrix of the received diversity signal in a slow fading channel changes slowly; suppose there are N times of $\widetilde{R}$ estimations $[\widetilde{R}_1\widetilde{R}_2\cdots\widetilde{R}_N]$, then the estimation error can be computed as follows:

$$\xi = \frac{1}{M}\frac{1}{N-1}\sum_{i=2}^{N}\left|\widetilde{R}_i - \widetilde{R}_{i-1}\right|^2$$

wherein, M is a number of elements in $\widetilde{R}$.

When information of interference user is known, it is feasible to construct the covariance matrix or the interference-plus-noise covariance matrix of the received signal through a theoretically deducing method; for the CDMA system,

$$R = \left( \sum_{i=0}^{K} \hat{R}_i \right) + \sigma^2 R_N$$

wherein, $\sigma^2$ is a white noise power spectral density, and $R_N$ is a white noise power covariance matrix. i=0 denotes a demodulation user, and i=1 to k denotes the interference user. When $\hat{R}_0$ denotes the covariance matrix of the received diversity signal of the demodulation user, $R$ is the covariance matrix of the received diversity signal; when $\hat{R}_0$ denotes the interference caused by multiple paths of the demodulation user, $R$ is the interference-plus-noise covariance matrix.

For the FDMA system and the OFDM system,

$$R = GG^H + R_{uu}$$

wherein, H is the Hamiltonian transposition, $R_{uu}$ is the interference-plus-noise covariance matrix, G is a channel matrix of the demodulation user, and $R$ is the covariance matrix of the received signal.

By comparing $\tilde{R}$ with $R$, the error is defined as:

$$\psi = \frac{1}{M}\left|R - \tilde{R}\right|^2$$

The errors $\psi$ and $\xi$ are the basis for analyzing the proportion of the known interferences and the proportion of the unknown interferences in the interferences to which the one or more diversity signals are subject. If $\xi < \psi$, then it is considered that the theoretically constructed $R$ is not in accord with the actual situation, and there is a high-power unknown colored interference, 1=1; on the contrary, there is not the high-power unknown colored interference, 1=0.

Then, it is feasible to analyze the proportion of the known interferences and the proportion of the unknown interferences in the interferences, to which the one or more diversity signals are subject, according to the errors $\psi$ and $\xi$;

For example, it is feasible to further quantificationally define the interference type indication I and compute the proportion of the known interferences and the proportion of the unknown interferences, wherein the interfere types are:

$$\begin{cases} I = \dfrac{\psi}{2\xi} & \psi \leq 2\xi \\ I = 1 & \psi > 2\xi \end{cases}$$

wherein, 1=1 denotes that all the interferences are unknown; 1=0 denotes that all the interferences are known, 1=0 to 1 denotes that the interference types include the known interference and the unknown interference. There are many methods for defining I, which are not limited to the above two methods. or,

$\psi$ is compared with $\xi$ to judge whose proportion of the unknown interferences and the known interferences is greater; if $\xi < \psi$, then it means that the proportion of the unknown interferences is greater; on the contrary, it means that the proportion of the known interferences is greater.

After the proportion of the unknown interferences and the known interferences is computed according to the $\psi$ and the $\xi$, the specific process of combining the non-blind interference rejection receiver with the blind interference rejection receiver to combine the one or more diversity signals according to the proportion of the known interferences and the proportion of the unknown interferences in the interferences, to which the one or more diversity signals are subject, can be that:

as shown in Fig. 6, the channel fading coefficients h of the received diversity signals on all the diversities are set as $|h_1\ h_2\ L\ h_N|^T$, for the CDMA system, h is a channel estimation of each multipath on all the antennas; for the FDMA system and the OFDM system, h is the channel estimation on the same subcarrier and different antennas. A diversity combining weight of the non-blind interference rejection is $w = R^{-1}h$, and the diversity combining weight of the blind interference rejection is $\tilde{w} = \tilde{R}^{-1}h$.

The symbol after combination through the non-blind interference rejection is $r = w^H V$, and the symbol after combination through the blind interference rejection is $\tilde{r} = \tilde{w}^H V$. With reference to Fig. 4, combining according to the proportion needs to first solve $r$ and $\tilde{r}$, and then combine the results of the non-blind interference rejection and the blind interference rejection according to the formula $(1-I)r + I\tilde{r}$ and decode, wherein I is the interference type indication, and $I \in [01]$.

In an extreme case, when 1=1, only the result of the blind interference rejection is used; when 1=0, only the result of the non-blind interference rejection is used.

After comparing $\psi$ with $\xi$ to determine the proportion of the unknown interferences and the known interferences, the specific process of combining the non-blind interference rejection receiver with the blind interference rejection to combine the diversity signal according to the proportion of the known interferences and the proportion of the unknown interferences in the interferences to which the one or more diversity signals are subject can be that:

when $\psi$ is compared with $\xi$ to judge whether the proportion of the unknown interferences is greater than the proportion of the known interferences, if so, a combining weight of the blind interference rejection is computed, and the blind interference rejection receiver is used for combining the one or more diversity signals; if not, the non-blind interference rejection receiver is used for combining the one or more diversity signals. The specific combining process refers to that non-blind and blind interference rejection manners are selected to combine the one or more diversity signals as shown in Fig. 3.

In the present embodiment, the process of acquiring the one or more diversity signals includes that:

multipath searching is performed on all the antennas; different multipath signals are distributed to the different RAKE fingers to perform demodulation processing to acquire the one or more diversity signals;

or
a serial-to-parallel data conversion is performed on data on the antennas;
a time domain-frequency domain transformation is performed on parallel data after conversion;
data on each subcarrier or frequency point is extracted to acquire the one or more diversity signals.

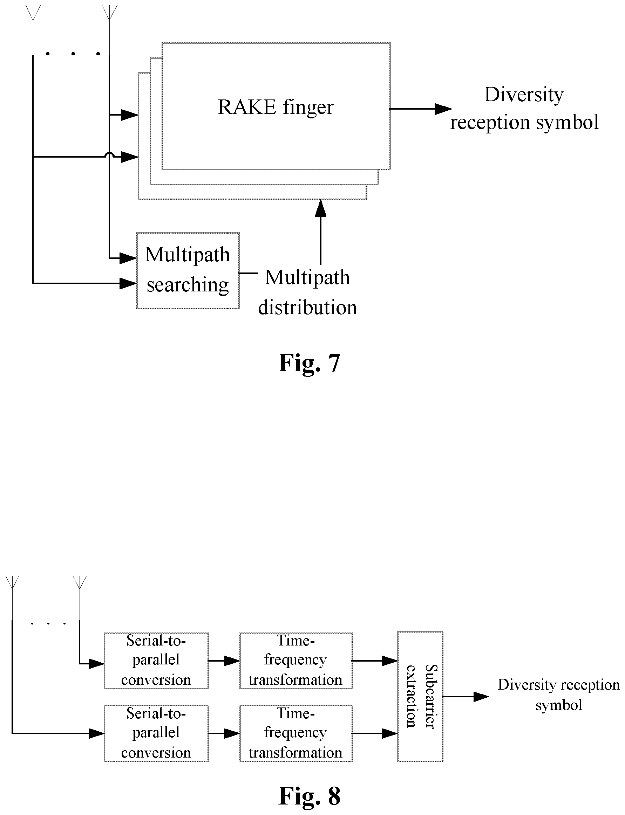

As shown in Fig. 7, in the CDMA system, first the multipath searching is performed on all the antennas, and then the different multipath signals are distributed to the different RAKE fingers to perform dispreading and descrambling to acquire diversity symbol data.

As shown in Fig. 8, in the FDMA system and the OFDM system, first the serial-to-parallel data conversion is performed on the data on all the antennas; then the time domain-frequency domain transformation is performed, the Discrete Fourier Transform (DFT) or the Fast Fourier Transform (FFT) is generally used; and the data on each subcarrier or frequency point is extracted to acquire the space diversity symbol.

Using the method for the interference rejection of the present embodiment can expand the application scope of interference rejection combination, and get the optimal performance under complex interference environments. In a situation where a part of the information of one or more interference sources is known, and another part of the information of one or more interference sources is unknown and changes dynamically, the method of the present embodiment can adaptively combine the manner of the non-blind interference rejection and the manner of the blind interference rejection, make the most use of the known information to reject the known interferences while performing blind detection and rejection on the unknown interferences, so as to achieve the best interference rejection effect.

Embodiment 2

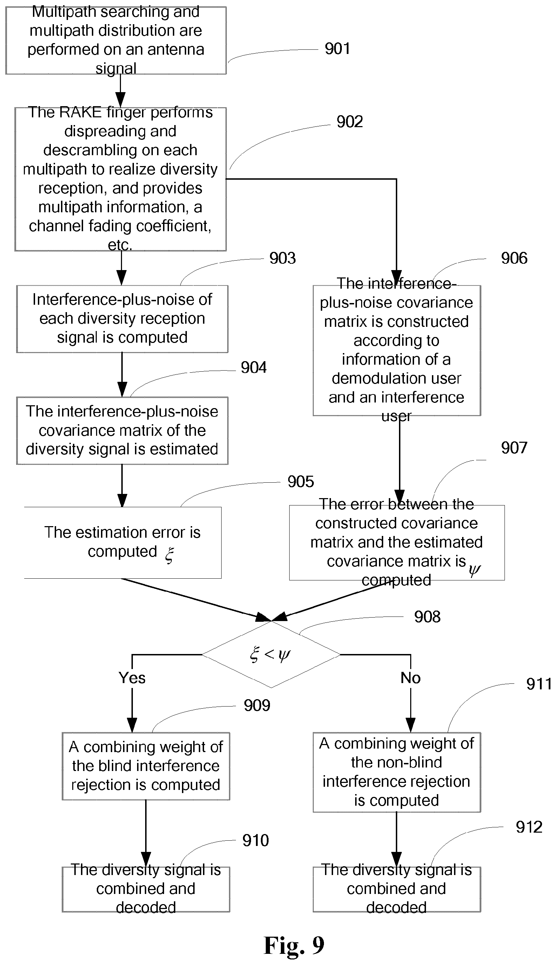

As shown in Fig. 9, the present embodiment introduces the specific implementation process of using the method for the interference rejection of the embodiment 1 in the CDMA system, which includes the following steps.

Step 901: multipath searching is performed on one or more antenna signals, and the multipath searched on all the antennas is distributed to the different RAKE fingers.

Step 902: each RAKE finger demodulates the signal of each multipath, and provides the symbol after dispreading and descrambling and multipath delay, the channel fading coefficient and other information.

Steps 901-902 constitute diversity reception.

Step 903: interference-plus-noise of each diversity reception signal is computed, which is obtained by subtracting the symbol output by each RAKE finger from an expected symbol. The expected symbol is from the pilot signal symbols of a control channel and other known information.

Step 904: the interference-plus-noise covariance matrix of the one or more diversity signals is estimated, which is obtained through a time averaging method.

Step 905: the estimation error $\xi$ of the estimated interference-plus-noise covariance matrix is computed.

Step 906: the theoretical interference-plus-noise covariance matrix is deduced according to the multiple delays, the channel fading coefficient and other information provided by the RAKE finger.

Step 907: the error $\psi$ between the theoretical covariance matrix and the estimated covariance matrix is computed.

Step 908: the two errors are compared to provide a interference type indication; this solution uses an alternative combining method, so it is only needed to compare whether $\xi$ is less than $\psi$; if $\xi$ is less than $\psi$, it means that the proportion of the unknown interferences is greater, and perform Step 909; or else, perform Step 911.

Steps 903-908 constitute an interference analysis process in diversity combination.

Step 909: the manner of the blind interference rejection is used for computing a combining weight of the blind interference rejection.

Step 910: the combining weight of the blind interference rejection is used for combining the received diversity signal.

Step 911: the manner of non-blind interference rejection is used for computing the combining weight of the non-blind interference rejection.

Step 912: the combining weight of the non-blind interference rejection is used for combining the received diversity signal.

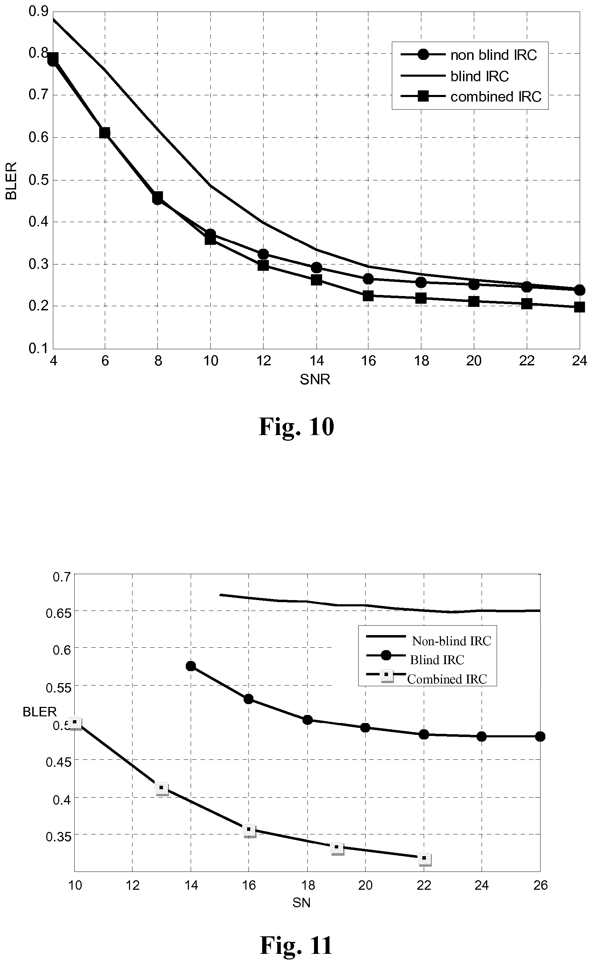

Fig. 10 provides a graphical representation of the effect of the solution. Two interference users are set in a simulation; one is a known interference user, and another is a unknown interference user. An x-coordinate in the figure is a reception Signal to Noise Ratio (SNR) of a demodulation user, and a y-coordinate is a Block Error Rate (BLER). As shown in the figure, when the interference type is relatively complicated, the effect of the solution is better than the effect of a single non-blind or blind interference rejection receiver, and a lower BLER is obtained under the same SNR.

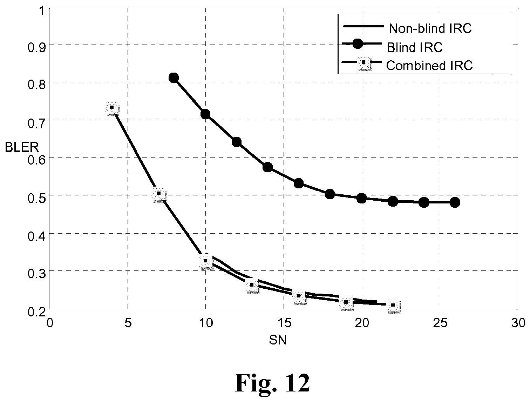

Fig. 11 and Fig. 12 provide an effect simulation of interference rejection to unknown and known interference users respectively. When the interference is unknown, the effect of the solution is best, the effect of the blind interference rejection takes second place, and the effect of the non-blind interference rejection is worst because of being lack of the information of interference user; when the interference is known, the effect of the solution is similar to that of the non-blind interference rejection, and the effect of the blind interference rejection is worst because the known information of interference user is not used.

Embodiment 3

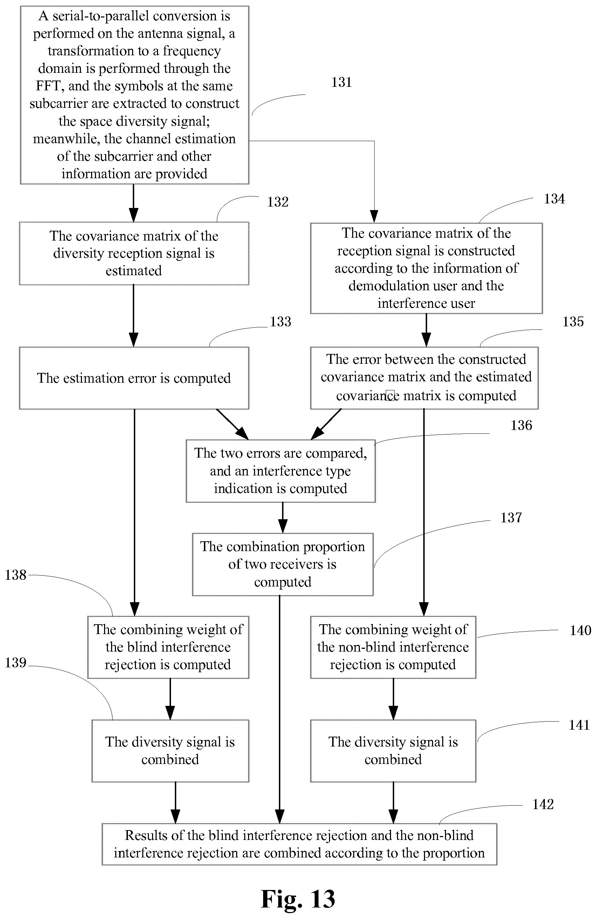

As shown in Fig. 13, the present embodiment introduces the process of using the method in the embodiment 1 to implement the interference rejection in the FDMA system and the OFDM system, which includes the following steps.

Step 131: a serial-to-parallel data conversion is performed on the one or more antenna signals, a transformation to a frequency domain is performed through an FFT, and the symbols at the same subcarrier are extracted to construct the space diversity signal; meanwhile, a channel estimation of each subcarrier and other information are provided.

Step 131 constitutes a diversity reception.

Step 132: one or more diversity signals are used for directly computing a covariance matrix of the diversity reception signal, which is obtained by a time averaging method.

Step 133: an estimation error $\xi$ of an estimated covariance matrix of the diversity reception signal is computed.

Step 134: a theoretical covariance matrix of the diversity reception signal is deduced according to the channel estimation of the subcarrier and other information.

Step 135: an error $\psi$ between the theoretical covariance matrix and the estimated covariance matrix is computed.

Step 136: the two errors are compared to provide an interference type indication; this solution uses the method of combining according to the proportion, so the interference type indication I is computed as follows:

$$\begin{cases} I = \dfrac{\psi}{2\xi} & \psi \le 2\xi \\ I = 1 & \psi > 2\xi \end{cases}$$

Steps 132-136 constitute an interference analysis process in diversity combination.

Step 137: the combining proportion is computed according to the interference type indication; a combining proportion of the blind interference rejection is I, and a combining proportion of the non-blind interference rejection is 1-I;

Step 138: a combining weight of the blind interference rejection is computed;

Step 139: a combining weight of the blind interference rejection is used for combining the received diversity signal, and the symbol after combination through the blind interference rejection is set as a;

Step 140: while performing Step 138, the combining weight of the non-blind interference rejection is computed.

Step 141: while performing Step 139, the combining weight of the blind interference rejection is used for combining the received diversity signal, and the symbol after combination through the non-blind interference rejection is set as b.

Step 142: the results of the blind interference rejection and the non-blind interference rejection are combined according to the combining proportion; a final symbol after combination is a*I+b*(1-I), and the final symbol is used for decoding.

Using the method for the interference rejection of the present embodiment can adaptively combine the non-blind interference rejection receiver and the blind interference rejection receiver in the FDMA system and the OFDM system, make the most use of the known information to reject the known interferences while performing blind detection and rejection on the unknown interferences, so as to achieve the best interference rejection effect.

Embodiment 4

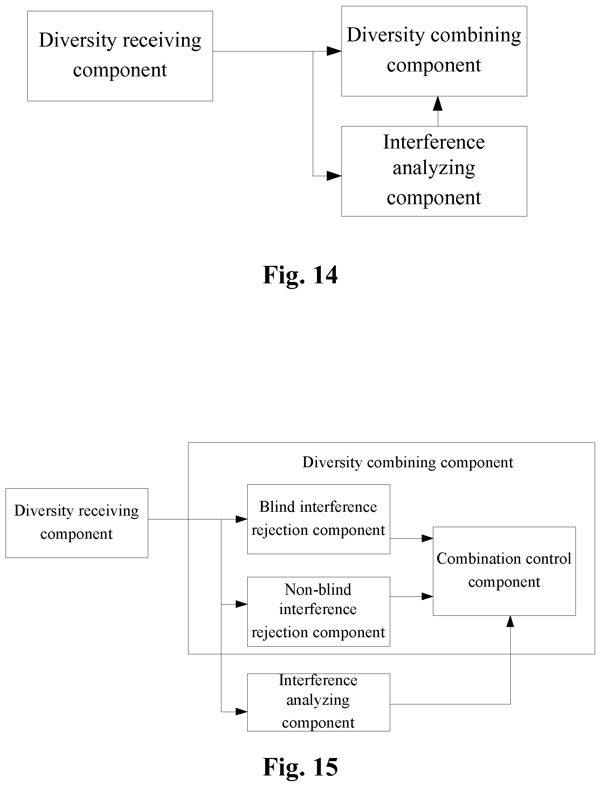

As shown in Fig. 14, the present embodiment provides a device for the interference rejection, which includes: a diversity receiving component, an interference analyzing component and a diversity combining component;

the diversity receiving component is configured to acquire one or more diversity signals;

the interference analyzing component is configured to analyze interference types of the interferences to which the one or more diversity signals are subject; and

the diversity combining component is configured to, according to analysis result of the interference analyzing component, select a corresponding interference rejection mechanism to combine the one or more diversity signals.

The device for the interference rejection of the present embodiment can be set on either a base station or a user terminal.

As shown in Fig. 15, the diversity combining component in the present embodiment includes: a blind interference rejection component, a non-blind interference rejection component and a combination control component;

the blind interference rejection component is configured to use a blind interference rejection manner to combine the one or more diversity signals under the control of the combination control component;

the non-blind interference rejection component is configured to use a non-blind interference rejection manner to combine the one or more diversity signals under the control of the combination control component; and

the combination control component is configured to control the blind interference rejection component or the non-blind interference rejection component to combine the one or more diversity signals according to the analysis result, or combine the non-blind interference rejection component with the blind interference rejection component to combine the one or more diversity signals according to the analysis result.

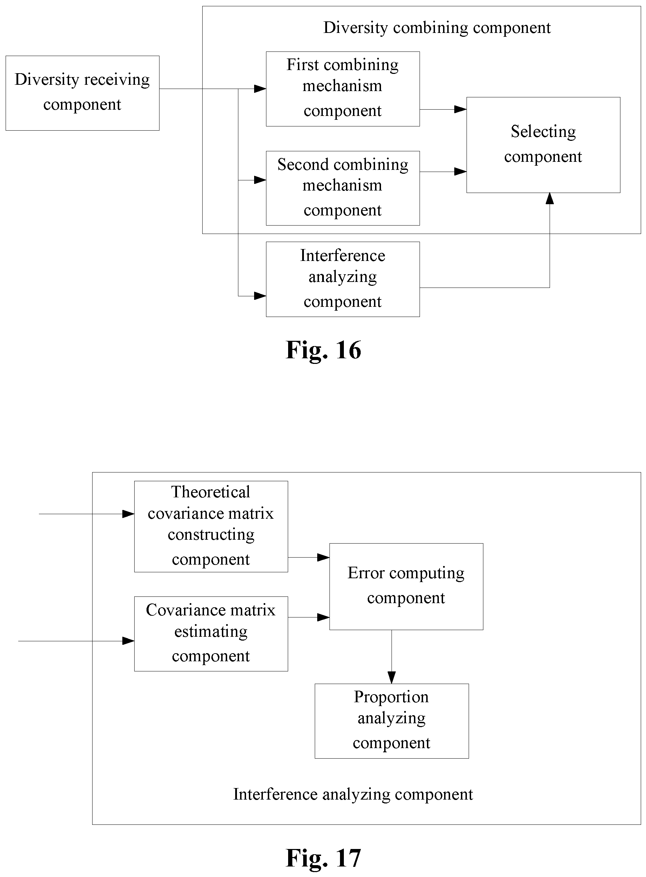

As shown in Fig. 16, the diversity combining component in the present embodiment includes: a selecting component, a first combining mechanism component and a second combining mechanism component; the selecting component is configured to select the first combining mechanism component or the second combining mechanism component to combine the one or more diversity signals according to the analysis result; the first combining mechanism component is configured to use the blind interference rejection or the non-blind interference rejection to combine the one or more diversity signals; and the second combining mechanism component is configured to combine the non-blind interference rejection with the blind interference rejection to combine the one or more diversity signals.

The structure of the first combining mechanism component and the second combining mechanism component in the present embodiment can be a structure of the diversity combining component shown in Fig. 17.

In an example embodiment, the interference analyzing component is configured to analyze the proportion of the interferences whose interference types are known interference and unknown interference in the interferences to which the one or more diversity signal are subject.

As shown in Fig. 17, the interference analyzing component in the present embodiment includes: a covariance matrix estimating component, a theoretical covariance matrix constructing component, an error computing component, a comparing component and a proportion analyzing component; the covariance matrix estimating component is configured to directly estimate a covariance matrix of the one or more diversity signals or directly estimate an interference-plus-noise covariance matrix of the one or more diversity signals; the theoretical covariance matrix constructing component is configured to construct the theoretical covariance matrix of the one or more diversity signals or the theoretical interference-plus-noise covariance matrix of the one or more diversity signals; the error computing component is configured to compute an estimation error of the directly estimated covariance matrix, and compute an error between the theoretical covariance matrix and the directly estimated covariance matrix; the comparing component is configured to compare the estimation error of the directly estimated covariance matrix with the error between the theoretical covariance matrix and the directly estimated covariance matrix; and the proportion analyzing component is configured to, according to the estimation error of the directly estimated covariance matrix and the error between the theoretical covariance matrix and the directly estimated covariance matrix, analyze a proportion of the interferences whose interference types are known interference and unknown interference in the interferences to which the one or more diversity signal are subject.

In an example embodiment, the proportion analyzing component is configured to judge whether the proportion of the known interferences is greater than the proportion of the unknown interference in the interferences, to which the one or more diversity signal are subject, by comparing the estimation error of the directly estimated covariance matrix with the error between the theoretical covariance matrix and the directly estimated covariance matrix, or according to the estimation error of the directly estimated covariance matrix and the error between the theoretical covariance matrix and the directly estimated covariance matrix, directly compute the proportion of the known interferences and the proportion of the unknown interferences in the interferences to which the one or more diversity signal are subject; in this situation, the combination control component in the present embodiment is configured to control the blind interference rejection component or the non-blind interference rejection component to combine the one or more diversity signals according to the judgment result of the proportion analyzing component, or control the blind interference rejection component and the non-blind interference rejection component to respectively combine the one or more diversity signals, and combine the non-blind interference rejection receiver with the blind interference rejection receiver to combine results of the one or more diversity signals according to the proportion of the known interferences and the proportion of the unknown interferences in the interferences to which the one or more diversity signals are subject; the selecting component is configured to select the first combining mechanism component or the second combining mechanism component to combine the one or more diversity signals according to the proportion of the known interferences and the proportion of the unknown interferences in the interferences to which the one or more diversity signals are subject; the first combining mechanism component is configured to, according to the proportion of the known interferences and the proportion of the unknown interferences in the interferences to which the one or more diversity signal are subject, select the blind interference rejection or the non-blind interference rejection to combine the one or more diversity signals; and the second combining mechanism component is configured to use the non-blind interference rejection and the blind interference rejection to respectively combine the one or more diversity signals, and according to the proportion of the known interferences and the proportion of the unknown interferences in the interferences to which the one or more diversity signals are subject, combine the non-blind interference rejection receiver with the blind interference rejection receiver to combine the results of the one or more diversity signals.

In an example embodiment, the theoretical covariance matrix constructing component in the present embodiment is configured to use a control channel in each of the one or more diversity signals to compute a diversity channel fading coefficient, and then use the diversity channel fading coefficient to deduce the theoretical covariance matrix of the one or more diversity signals or the theoretical interference-plus-noise covariance matrix of the one or more diversity signals, or use a pilot signal or a reference signal in each diversity signal to compute a channel fading coefficient on each subcarrier of the one or more diversity signals, and then use the channel fading coefficient to deduce the theoretical covariance matrix of the one or more diversity signals or the theoretical interference-plus-noise covariance matrix of the one or more diversity signals.

Embodiment 5

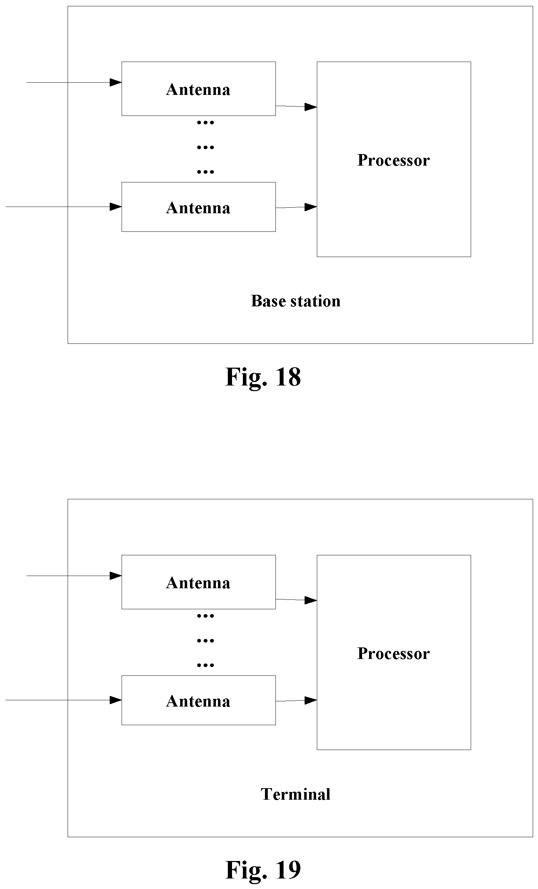

As shown in Fig. 18, the present embodiment provides a base station which can enhance the interference rejection effect; specifically, the base station includes: at least two antennas and a processor;

each of the at least two antennas is configured to receive an external signal and convert the received signal to a antenna signal; and

the processor is configured to acquire one or more diversity signals according to all the antenna signals, analyze the interference types of the interferences to which the one or more diversity signals are subject, and according to the analysis result, select a corresponding interference rejection mechanism to combine the one or more diversity signals.

In the present embodiment, the process that the processor acquires the one or more diversity signals according to all the antenna signals refers to the description of Fig. 7 and Fig. 8.

In an example embodiment, the processor in the present embodiment is configured to select the blind interference rejection or the non-blind interference rejection to combine the one or more diversity signals according to the analysis result, or combine the non-blind interference rejection with the blind interference rejection to combine the one or more diversity signals according to the analysis result.

In an example embodiment, the processor in the present embodiment is configured to, according to the analysis result, select one of the following two combining mechanisms to combine the one or more diversity signals:

the first combining mechanism is to select the blind interference rejection or the non-blind interference rejection to combine the one or more diversity signals; and
the second combining mechanism is to combine the non-blind interference rejection with the blind interference rejection to combine the one or more diversity signals.

All functions executed by the processor of the present embodiment can be implemented by software.

Embodiment 6

As shown in Fig. 19, the present embodiment provides a terminal which can enhance the interference rejection effect; specifically, the terminal includes: at least two antennas and a processor;

each of the at least two antennas is configured to receive an external signal and convert the received signal to a antenna signal; and

the processor is configured to acquire one or more diversity signals according to all the antenna signals, analyze the interference types of the interferences to which the one or more diversity signals are subject, and according to the analysis result, select a corresponding interference rejection mechanism to combine the diversity signal.

In the present embodiment, the process that the processor acquires the one or more diversity signals according to all the antenna signal refers to the description of Fig. 7 and Fig. 8.

In an example embodiment, the processor in the present embodiment is configured to select the blind interference rejection or the non-blind interference rejection to combine the one or more diversity signals according to the analysis result, or combine the non-blind interference rejection with the blind interference rejection to combine the one or more diversity signals according to the analysis result.

In an example embodiment, the processor is configured to, according to the analysis result, select one of the following two combining mechanisms to combine the one or more diversity signals:

the first combining mechanism is to select the blind interference rejection or the non-blind interference rejection to combine the one or more diversity signals; and
the second combining mechanism is to combine the non-blind interference rejection with the blind interference rejection to combine the one or more diversity signals.

All the functions executed by the processor of the present embodiment can be implemented by software. The terminal of the present embodiment can be a mobile phone, a tablet computer, and so on.

The above content is a further elaboration of the disclosure made in combination with the specific embodiments, and it should not be considered that the specific implementations of the disclosure are only limited to the elaboration. On the premise of not departing from the conception of the disclosure, those of ordinary skill in the art to which the disclosure belongs can also make a number of simple deductions and replacements, which shall fall within the protection scope of the disclosure.

## Claims

1. A method for interference rejection, comprising:

   acquiring one or more diversity signals, and analyzing interference types of interferences to which the one or more diversity signals are subject (201); and
   selecting, according to an analysis result, a corresponding interference rejection mechanism to combine the one or more diversity signals (202); **characterized in that** analyzing the interference types of the interferences to which the one or more diversity signals are subject (201) comprises: analyzing the interference types of the interferences, to which the one or more diversity signals are subject, according to a proportion of interferences whose interference types are known interference in the interferences and a proportion of interferences whose interference types are unknown interference in the interferences.

2. The method as claimed in claim 1, wherein analyzing the interference types of the interferences, to which the one or more diversity signals are subject, according to the proportion of the interferences whose interference types are known interference in the interferences and a proportion of interferences whose interference types are unknown interference in the interferences comprises:

   directly estimating a covariance matrix of the one or more diversity signals or directly estimating an interference-plus-noise covariance matrix of the one or more diversity signals;
   constructing a theoretical covariance matrix of the one or more diversity signals or a theoretical interference-plus-noise covariance matrix of the one or more diversity signals;
   computing an estimation error of the directly estimated covariance matrix, and computing an error between the theoretical covariance matrix and the directly estimated covariance matrix; and
   analyzing, according to the estimation error of the directly estimated covariance matrix and the error between the theoretical covariance matrix and the directly estimated covariance matrix, the interference types of the interferences, to which the one or more diversity signals are subject, according to the proportion of the interferences whose interference types are known interference in the interferences and a proportion of interferences whose interference types are unknown interference in the interferences.

3. The method as claimed in claim 1 or 2, wherein selecting, according to the analysis result, the corresponding interference rejection mechanism to combine the one or more diversity signals (202) comprises:

   selecting, according to the analysis result, a blind interference rejection or a non-blind interference rejection to combine the one or more diversity signals;
   or
   using, according to the analysis result, both a non-blind interference rejection and a blind interference rejection to combine the one or more diversity signals.

4. The method as claimed in claim 1 or 2, wherein selecting, according to the analysis result, the corresponding interference rejection mechanism to combine the one or more diversity signals (202) comprises:

   selecting, according to the analysis result, one of two combining mechanisms to combine the one or more diversity signals, wherein
   the first combining mechanism of the two combining mechanisms is to select a blind interference rejection or a non-blind interference rejection to combine the one or more diversity signals; and
   the second combining mechanism of the two combining mechanisms is to use both the non-blind interference rejection and the blind interference rejection to combine the one or more diversity signals.

5. The method as claimed in claim 2, wherein analyzing, according to the estimation error of the directly estimated covariance matrix and the error between the theoretical covariance matrix and the directly estimated covariance matrix, the interference types of the interferences, to which the one or more diversity signal are subject, according to the proportion of the interferences whose interference types are known interference in the interferences and a proportion of interferences whose interference types are unknown interference in the interferences (504) comprises:

   judging whether the proportion of the known interference is greater than the proportion of the unknown interference in the interferences, to which the one or more diversity signals are subject, by comparing the estimation error of the directly estimated covariance matrix with the error between the theoretical covariance matrix and the directly estimated covariance matrix; or according to the estimation error of the directly estimated covariance matrix and the error between the theoretical covariance matrix and the directly estimated covariance matrix, directly computing the proportion of the known interferences and the proportion of the unknown interferences in the interferences to which the one or more diversity signals are subject; according to the analysis result, using the blind interference rejection or the non-blind interference rejection to combine the one or more diversity signals comprises: according to a judgment result, using the non-blind interference rejection or the blind interference rejection to combine the one or more diversity signals;

using, according to the analysis result, both the non-blind interference rejection and the blind interference rejection to combine the one or more diversity signals comprises: using the non-blind interference rejection and the blind interference rejection to respectively combine the diversity signal; combining, according to the proportion of the known interferences and the proportion of the unknown interferences in the interferences to which the one or more diversity signals are subject, a result of combing the one or more diversity signals using the non-blind interference rejection receiver and a result of combing the one or more diversity signals using the blind interference rejection receiver to combine results of the one or more diversity signals;

selecting, according to the analysis result, one of the following two combining mechanisms to combine the one or more diversity signals comprises:

    selecting, according to the proportion of the known interferences and the proportion of the unknown interferences in the interferences to which the one or more diversity signals are subject, one of the following two combining mechanisms to combine the one or more diversity signals, wherein the first combining mechanism of the two combining mechanisms is to select, according to the proportion of the known interferences and the proportion of the unknown interferences in the interferences to which the one or more diversity signals are subject, the blind interference rejection or the non-blind interference rejection to combine the one or more diversity signals; and the second combining mechanism of the two combining mechanisms is to use the non-blind interference rejection and the blind interference rejection to respectively combine the one or more diversity signals; and combining, according to the proportion of the known interferences and the proportion of the unknown interferences in the interferences to which the one or more diversity

sity signals are subject, a result of combing the one or more diversity signals using the non-blind interference rejection receiver and a result of combing the one or more diversity signals using the blind interference rejection receiver to combine results of the one or more diversity signals.

6. The method as claimed in claim 2, wherein constructing the theoretical covariance matrix of the one or more diversity signals or the theoretical interference-plus-noise covariance matrix of the one or more diversity signals comprises:

    using a control channel in each of the one or more diversity signals to compute a diversity channel fading coefficient; using the diversity channel fading coefficient to deduce the theoretical covariance matrix of the one or more diversity signals or the theoretical interference-plus-noise covariance matrix of the one or more diversity signals; or using a pilot signal or a reference signal in each diversity signal to compute a channel fading coefficient on each subcarrier of each diversity signal; using the channel fading coefficient to deduce the theoretical covariance matrix of the one or more diversity signals or the theoretical interference-plus-noise covariance matrix of the one or more diversity signals.

7. A device for interference rejection, comprising: a diversity receiving component, an interference analyzing component and a diversity combining component; the diversity receiving component is configured to acquire one or more diversity signals; the interference analyzing component is configured to analyze the interference types of interferences to which the one or more diversity signals are subject; and the diversity combining component is configured to, according to an analysis result of the interference analyzing component, select a corresponding interference rejection mechanism to combine the one or more diversity signals; **characterized in that** the interference analyzing component is configured to perform the analysis according to a proportion of the interferences whose interference types are known interference and unknown interference in the interferences to which the one or more diversity signals are subject.

8. The device as claimed in claim 7 wherein the interference analyzing component comprises: a covariance matrix estimating component, a theoretical covariance matrix constructing component, an error computing component, a comparing component and a proportion analyzing component;

the covariance matrix estimating component is configured to directly estimate a covariance matrix of the one or more diversity signals or directly estimate an interference-plus-noise covariance matrix of the one or more diversity signals;

the theoretical covariance matrix constructing component is configured to construct a theoretical covariance matrix of the one or more diversity signals or a theoretical interference-plus-noise covariance matrix of the one or more diversity signals;

the error computing component is configured to compute an estimation error of the directly estimated covariance matrix, and compute an error between the theoretical covariance matrix and the directly estimated covariance matrix;

the comparing component is configured to compare the estimation error of the directly estimated covariance matrix with the error between the theoretical covariance matrix and the directly estimated covariance matrix; and

the proportion analyzing component is configured to, according to the estimation error of the directly estimated covariance matrix and the error between the theoretical covariance matrix and the directly estimated covariance matrix, analyze the interference types of the interferences, to which the one or more diversity signals are subject, according to the proportion of the interferences whose interference types are known interference in the interferences and a proportion of interferences whose interference types are unknown interference in the interferences.

9. The device as claimed in claim 7 or 8, wherein the diversity combining component comprises: a blind interference rejection component, a non-blind interference rejection component and a combination control component;

the blind interference rejection component is configured to use a blind interference rejection manner to combine the one or more diversity signals under the control of the combination control component;

the non-blind interference rejection component is configured to use a non-blind interference rejection manner to combine the one or more diversity signals under the control of the combination control component; and

the combination control component is configured to control the blind interference rejection component or the non-blind interference rejection component to combine the one or more diversity signals according to the analysis result, or use both the non-blind interference rejection component and the blind interference rejection component to combine the one or more diversity signals according to the analysis result.

10. The device as claimed in claim 7 or 8, wherein the diversity combining component comprises: a selecting component, a first combining mechanism component and a second combining mechanism component;

the selecting component is configured to select the first combining mechanism component or the second combining mechanism component to combine the one or more diversity signals according to the analysis result;

the first combining mechanism component is configured to use the blind interference rejection or the non-blind interference rejection to combine the one or more diversity signals; and

the second combining mechanism component is configured to use both the non-blind interference rejection and the blind interference rejection to combine the one or more diversity signals.

11. The device as claimed in claim 7 or 8, wherein the proportion analyzing component is configured to judge whether the proportion of the known interferences is greater than the proportion of the unknown interference in the interferences, to which the one or more diversity signals are subject, by comparing the estimation error of the directly estimated covariance matrix with the error between the theoretical covariance matrix and the directly estimated covariance matrix, or according to the estimation error of the directly estimated covariance matrix and the error between the theoretical covariance matrix and the directly estimated covariance matrix, directly compute the proportion of the known interferences and the proportion of the unknown interferences in the interferences to which the one or more diversity signals are subject;

the combination control component is configured to control the blind interference rejection component or the non-blind interference rejection component to combine the one or more diversity signals according to a judgment result of the proportion analyzing component, or control the blind interference rejection component and the non-blind interference rejection component to respectively combine the one or more diversity signals, and combine a result of combining the one or more diversity signals using a non-blind interference rejection receiver with a result of combining the one or more diversity signals using a blind interference rejection receiver according to the proportion of the known interferences and the proportion of the unknown interferences in the interferences to which the one or more diversity signals are subject;

the selecting component is configured to select the first combining mechanism component or the second combining mechanism component to combine the one or more diversity signals according to the proportion of the known interferences and the proportion of the unknown interferences in the interferences to which the one or more diversity signals are subject;

the first combining mechanism component is configured to, according to the proportion of the known interferences and the proportion of the unknown interferences in the interferences to which the one or more diversity signals are subject, select the blind interference rejection or the non-blind interference rejection to combine the one or more diversity signals; and

the second combining mechanism component is configured to use the non-blind interference rejection and the blind interference rejection to respectively combine the one or more diversity signals, and according to the proportion of the known interferences and the proportion of the unknown interferences in the interferences to which the one or more diversity signals are subject, combine a result of combing the one or more diversity signals using the non-blind interference rejection receiver with a result of combing the one or more diversity signals using the blind interference rejection receiver;

or

the theoretical covariance matrix constructing component is configured to use a control channel in each of the one or more diversity signals to compute a diversity channel fading coefficient, and then use the diversity channel fading coefficient to deduce the theoretical covariance matrix of the one or more diversity signals or the theoretical interference-plus-noise covariance matrix of the one or more diversity signals, or use a pilot signal or a reference signal in each diversity signal to compute a channel fading coefficient on each subcarrier of each diversity signal, and then use the channel fading coefficient to deduce the theoretical covariance matrix of the one or more diversity signals or the theoretical interference-plus-noise covariance matrix of the one or more diversity signals.

12. A base station, comprising at least two antennas and a processor;

each of the at least two antennas is configured to receive an external signal and convert the received signal to an antenna signal; and

the processor is configured to acquire one or more diversity signals according to one or more antenna signals received by the at least two antennas, analyze the interference types of interferences to which the one or more diversity signals are subject, and according to an analysis result, select a corresponding interference rejection mechanism to combine the one or more diversity signals

wherein the base station is further configured to realize analyzing the interference types of the interferences to which the one or more diversity signals are subject by the following steps:

analyzing the interference types of the interferences,

to which the one or more diversity signals are subject, according to a proportion of interferences whose interference types are known interference in the interferences and a proportion of interferences whose interference types are unknown interference in the interferences.

13. The base station as claimed in claim 12, wherein the processor is configured to select a blind interference rejection or a non-blind interference rejection to combine the one or more diversity signals according to the analysis result, or use both the non-blind interference rejection and the blind interference rejection to combine the one or more diversity signals according to the analysis result;

or

the processor is configured to, according to the analysis result, select one of following two combining mechanisms to combine the diversity signal, wherein:

the first combining mechanism of the two combining mechanisms is to select a blind interference rejection or a non-blind interference rejection to combine the one or more diversity signals;

the second combining mechanism of the two combining mechanisms is to use both the non-blind interference rejection and the blind interference rejection to combine the one or more diversity signals.

14. A terminal, comprising at least two antennas and a processor;

each of the at least two antennas is configured to receive an external signal and convert the received signal to an antenna signal; and

the processor is configured to acquire one or more diversity signals according to one or more antenna signals received by the at least two antennas, analyze the interference types of interferences to which the one or more diversity signals are subject, and according to an analysis result, select a corresponding interference rejection mechanism to combine the one or more diversity signals

wherein the terminal is further configured to realize analyzing the interference types of the interferences to which the one or more diversity signals are subject by the following steps:

analyzing the interference types of the interferences, to which the one or more diversity signals are subject, according to a proportion of interferences whose interference types are known interference in the interferences and a proportion of interferences whose interference types are unknown interference in the interferences.

15. The terminal as claimed in claim 14, wherein the processor is configured to select a blind interference rejection or a non-blind interference rejection to combine the one or more diversity signals according to the analysis result, or use both a non-blind interference rejection and a blind interference rejection to combine the one or more diversity signals according to the analysis result;
or
the processor is configured to, according to the analysis result, select one of following two combining mechanisms to combine the one or more diversity signals, wherein:

the first combining mechanism of the two combining mechanisms is to select a blind interference rejection or a non-blind interference rejection to combine the one or more diversity signals; the second combining mechanism of the two combining mechanisms is to use both the non-blind interference rejection and the blind interference rejection to combine the one or more diversity signals.

**Patentansprüche**

1. Verfahren zur Interferenzunterdrückung, umfassend:

Erfassen eines oder mehrerer Diversity-Signale und Analysieren von Interferenztypen von Interferenzen, denen das eine oder mehrere Diversity-Signale unterworfen sind (201); und Auswählen, entsprechend einem Analyseergebnis, eines entsprechenden Interferenz-Unterdrückungsmechanismus, um das eine oder mehrere Diversity-Signale zu kombinieren (202);
**dadurch gekennzeichnet, dass** Analysieren der Interferenztypen der Interferenzen, denen das eine oder mehrere Diversity-Signale unterworfen sind (201), umfasst: Analysieren der Interferenztypen der Interferenzen, denen das eine oder mehrere Diversity-Signale unterworfen sind, entsprechend einer Proportion von Interferenzen, deren Interferenztypen bekannte Interferenzen in den Interferenzen sind und einer Proportion von Interferenzen, deren Interferenztypen unbekannte Interferenzen in den Interferenzen sind.

2. Verfahren nach Anspruch 1, wobei Analysieren der Interferenztypen der Interferenzen, denen das eine oder mehrere Diversity-Signale unterworfen sind, entsprechend der Proportion von Interferenzen, deren Interferenztypen bekannte Interferenz in den Interferenzen sind, und einer Proportion von Interferenzen, deren Interferenztypen unbekannte Interferenz in den Interferenzen sind, umfasst:

direkt Schätzen einer Kovarianzmatrix des einen oder mehrerer Diversity-Signale oder direkt Schätzen einer Interferenz-plus-Geräusch Kovarianzmatrix des einen oder mehrerer Diversity-Signale;
Aufbauen einer theoretischen Kovarianzmatrix des einen oder mehrerer Diversity-Signale oder einer theoretischen Interferenz-plus-Geräusch Kovarianzmatrix des einen oder mehrerer Diversity-Signale;
Berechnen eines Schätzfehlers der direkt geschätzten Kovarianzmatrix, und Berechnen eines Fehlers zwischen der theoretischen Kovarianzmatrix und der direkt geschätzten Kovarianzmatrix; und
Analysieren, entsprechend dem Schätzfehler der direkt geschätzten Kovarianzmatrix und dem Fehler zwischen der theoretischen Kovarianzmatrix und der direkt geschätzten Kovarianzmatrix der Interferenztypen der Interferenzen denen das eine oder mehrere Diversity-Signale unterworfen sind, entsprechend der Proportion der Interferenzen, deren Interferenztypen bekannte Interferenz in den Interferenzen sind und einer Proportion von Interferenzen, deren Interferenztypen unbekannte Interferenz in den Interferenzen sind.

3. Verfahren nach Anspruch 1 oder 2, wobei Auswählen, entsprechend dem Analyseergebnis, des entsprechenden Interferenz-Unterdrückungsmechanismus zum Kombinieren des einen oder mehrerer Diversity-Signale (202) umfasst:

Auswählen, entsprechend dem Analyseergebnis, einer blinden Interferenzunterdrückung oder einer nicht blinden Interferenzunterdrückung, um das eine oder mehrere Diversity-Signale zu kombinieren;
oder
Verwenden, entsprechend dem Analyseergebnis, beider, einer nicht blinden Interferenzunterdrückung und einer blinden Interferenzunterdrückung, um das eine oder mehrere Diversity-Signale zu kombinieren.

4. Verfahren nach Anspruch 1 oder 2, wobei Auswählen, entsprechend dem Analyseergebnis, des entsprechenden Interferenz-Unterdrückungsmechanismus zum Kombinieren des einen oder mehrerer Diversity-Signale (202) umfasst:

Auswählen, entsprechend dem Analyseergebnis, eines von zwei Kombiniermechanismen, um das eine oder mehrere Diversity-Signale zu kombinieren, wobei
der erste Kombiniermechanismus der beiden Kombiniermechanismen das Auswählen einer blinden Interferenzunterdrückung oder einer nicht blinden Interferenzunterdrückung ist, um das eine oder mehrere Diversity-Signale zu kombinieren; und
der zweite Kombiniermechanismus der beiden Kombiniermechanismen das Verwenden beider, der nicht blinden Interferenzunterdrückung und der blinden Interferenzunterdrückung ist, um das eine oder mehrere Diversity-Signale zu kombinieren.

5. Verfahren nach Anspruch 2, wobei Analysieren entsprechend dem Schätzfehler der direkt geschätzten Kovarianzmatrix und dem Fehler zwischen der theoretischen Kovarianzmatrix und der direkt geschätzten Kovarianzmatrix der Interferenztypen der Interferenzen denen das eine oder mehrere Diversity-Signale unterworfen sind, entsprechend der Proportion der Interferenzen, deren Interferenztypen bekannte Interferenz in den Interferenzen sind und einer Proportion von Interferenzen, deren Interferenztypen unbekannte Interferenz in den Interferenzen sind (504), umfasst:

Beurteilen, ob die Proportion der bekannten Interferenz größer ist, als die Proportion der unbekannten Interferenz in den Interferenzen, denen das eine oder mehrere Diversity-Signale unterworfen sind, durch Vergleichen des Schätzfehlers der direkt geschätzten Kovarianzmatrix mit dem Fehler zwischen der theoretischen Kovarianzmatrix und der direkt geschätzten Kovarianzmatrix; oder
entsprechend dem Schätzfehler der direkt geschätzten Kovarianzmatrix und dem Fehler zwischen der theoretischen Kovarianzmatrix und der direkt geschätzten Kovarianzmatrix, direkt Berechnen der Proportion der bekannten Interferenzen und der Proportion der unbekannten Interferenzen in den Interferenzen, denen das eine oder mehrere Diversity-Signale unterworfen sind;
wobei entsprechend dem Analyseergebnis, Verwenden der blinden Interferenzunterdrückung oder der nicht blinden Interferenzunterdrückung zum Kombinieren des einen oder mehrerer Diversity-Signale umfasst: entsprechend einem Beurteilungsergebnis Verwenden der nicht blinden Interferenzunterdrückung oder der blinden Interferenzunterdrückung, um das eine oder mehrere Diversity-Signale zu kombinieren;
wobei Verwenden, entsprechend dem Analyseergebnis, beider, der nicht blinden Interferenzunterdrückung und der blinden Interferenzunterdrückung, um das eine oder mehrere Diversity-Signale zu kombinieren, umfasst: Verwenden der nicht blinden Interferenzunterdrückung und der blinden Interferenzunterdrückung, um jeweils das Diversity-Signal zu kombinieren;
Kombinieren, entsprechend der Proportion der bekannten Interferenzen und der Proportion der unbekannten Interferenzen in den Interferenzen, denen das eine oder mehrere Diversity-Signale unterworfen sind, eines Ergebnisses des Kombinierens des einen oder mehrerer Diversity-Signale unter Verwendung des nicht blinden Interferenz-Unterdrückungsempfängers und eines Ergebnisses des Kombinierens des einen oder mehrerer Diversity-Signale unter Verwendung des blinden Interferenz-Unterdrückungsempfängers, um Ergebnisse des einen oder mehrerer Diversity-Signale zu kombinieren;
wobei Auswählen, entsprechend dem Analyseergebnis, eines der folgenden beiden Kombinationsmechanismen, um das eine oder mehrerer Diversity-Signale zu kombinieren, umfasst:

Auswählen, entsprechend der Proportion der bekannten Interferenzen und der Proportion von den unbekannten Interferenzen in den Interferenzen, denen das eine oder mehrere Diversity-Signale unterworfen sind, eines der folgenden beiden Kombinationsmechanismen, um das eine oder mehrere Diversity-Signale zu kombinieren, wobei
der erste Kombinationsmechanismus der beiden Kombinationsmechanismen das Auswählen entsprechend der Proportion der bekannten Interferenzen und der Proportion der unbekannten Interferenzen in den Interferenzen, denen das eine oder mehrere Diversity-Signale unterworfen sind, der blinden Interferenzunterdrückung oder der nicht blinden Interferenzunterdrückung ist, um das eine oder mehrerer Diversity-Signale zu kombinieren; und
der zweite Kombinationsmechanismus der beiden Kombinationsmechanismen das Verwenden der nicht blinden Interferenzunterdrückung und der blinden Interferenzunterdrückung ist, um jeweils das eine oder mehrere Diversity-Signale zu kombinieren; und Kombinieren, entsprechend der Proportion der bekannten Interferenzen und der Proportion von den unbekannten Interferenzen in den Interferenzen, denen das eine oder mehrere Diversity-Signale unterworfen sind, eines Ergebnisses des Kombinierens des einen oder mehrerer Diversity-Signale unter Verwendung des nicht blinden Interferenz-Unterdrückungsempfängers und eines Ergebnisses des Kombinierens des einen oder mehrerer Diversity-Signale unter Verwendung des blinden Interferenz-Unterdrückungsempfängers, um Ergebnisse des einen oder mehrerer Diversity-Signale zu kombinieren.

6. Verfahren nach Anspruch 2, wobei Aufbauen der theoretischen Kovarianzmatrix des einen oder mehrerer Diversity-Signale oder der theoretischen Interferenz-plus-Geräusch Kovarianzmatrix des einen oder mehrerer Diversity-Signale umfasst:

Verwenden eines Steuerungskanals in jedem des einen oder mehrerer Diversity-Signale zum Berechnen eines Diversity-Kanalschwundkoeffizienten;
Verwenden des Diversity-Kanalschwundkoeffizienten zum Ableiten der theoretischen Kovarianzmatrix des einen oder mehrerer Diversity-Signale oder der theoretischen Interferenz-plus-Geräusch Kovarianzmatrix des einen oder mehrerer Diversity-Signale;
oder
Verwenden eines Pilot-Signals oder eines ReferenzSignals in jedem Diversity-Signal zum Berechnen eines Kanalschwundkoeffizienten an jedem Teilträger eines jeden Diversity-Signals;
Verwenden des Kanalschwundkoeffizienten zum Ableiten der theoretischen Kovarianzmatrix des einen oder mehrerer Diversity-Signale oder der theoretischen Interferenz-plus-Geräusch Kovarianzmatrix des einen oder mehrerer Diversity-Signale.

7. Vorrichtung zur Interferenzunterdrückung, umfassend: eine Diversity-Empfangskomponente, eine Interferenz-Analysekomponente, und eine Diversity-Kombinationskomponente;
wobei die Diversity-Empfangskomponente konfiguriert ist, um ein oder mehrere Diversity-Signale zu erfassen;
wobei die Interferenz-Analysekomponente konfiguriert ist, um die Interferenztypen der Interferenzen zu analysieren, denen das eine oder mehrere Diversity-Signale unterworfen sind; und
wobei die Diversity-Kombinationskomponente konfiguriert ist, um entsprechend dem Analyseergebnis der Interferenz-Analysekomponente einen entsprechenden Interferenz-Unterdrückungsmechanismus auszuwählen, um das eine oder mehrere Diversity-Signale zu kombinieren;
**dadurch gekennzeichnet, dass** die Interferenz-Analysekomponente konfiguriert ist, um die Analyse entsprechend einer Proportion von Interferenzen, deren Interferenztypen bekannte Interferenz und unbekannte Interferenz in den Interferenzen sind, denen das eine oder mehrere Diversity-Signale unterworfen sind, durchzuführen.

8. Vorrichtung nach Anspruch 7, wobei die Interferenz-Analysekomponente umfasst: eine Komponente zum Schätzen der Kovarianzmatrix, eine Komponente zum Aufbau einer theoretischen Kovarianzmatrix, eine Fehlerberechnungskomponente, eine Vergleichskomponente und eine Proportionsanalysekomponente;
wobei die Komponente zum Schätzen der Kovarianzmatrix konfiguriert ist, um direkt eine Kovarianzmatrix von dem einen oder mehreren Diversity-Signalen zu schätzen oder direkt eine Interferenz-plus-Geräusch Kovarianzmatrix von dem einen oder mehreren Diversity-Signalen zu schätzen;
wobei die Komponente zum Aufbau einer theoretischen Kovarianzmatrix konfiguriert ist, um eine theoretische Kovarianzmatrix des einen oder mehrerer Diversity-Signale oder eine theoretische Interferenz-plus-Geräusch Kovarianzmatrix des einen oder mehrerer Diversity-Signale aufzubauen;
wobei die Fehlerberechnungskomponente konfiguriert ist, um einen Schätzfehler der direkt geschätzten Kovarianzmatrix zu berechnen, und einen Fehler zwischen der theoretischen Kovarianzmatrix und der direkt geschätzten Kovarianzmatrix zu berechnen;
wobei die Vergleichskomponente konfiguriert ist, um den Schätzfehler der direkt geschätzten Kovarianzmatrix mit dem Fehler zwischen der theoretischen Kovarianzmatrix und der direkt geschätzten Kovarianzmatrix zu vergleichen; und
wobei die Proportionsanalysekomponente konfiguriert ist, um entsprechend dem Schätzfehler der direkt geschätzten Kovarianzmatrix und dem Fehler zwischen der theoretischen Kovarianzmatrix und der direkt geschätzten Kovarianzmatrix die Interferenztypen der Interferenzen, denen das eine oder mehrere Diversity-Signale unterworfen sind, entsprechend der Proportion der Interferenzen zu analysieren, deren Interferenztypen bekannte Interferenz in den Interferenzen sind und einer Proportion von Interferenzen, deren Interferenztypen unbekannte Interferenz in den Interferenzen sind.

9. Vorrichtung nach Anspruch 7 oder 8, wobei die Diversity-Kombinationskomponente umfasst: eine Komponente zur blinden Interferenzunterdrückung, eine Komponente zur nicht blinden Interferenzunterdrückung und eine Kombinationssteuerungskomponente;
wobei die Komponente zur blinden Interferenzunterdrückung konfiguriert ist, um eine Art der blinden Unterdrückung zu verwenden, um das eine oder mehrere Diversity-Signale unter der Steuerung der Kombinationssteuerungskomponente zu kombinieren;
wobei die Komponente zur nicht blinden Interferenzunterdrückung konfiguriert ist, um eine Art der nicht blinden Unterdrückung zu verwenden, um das eine oder mehrere Diversity-Signale unter der Steuerung der Kombinationssteuerungskomponente zu kombinieren; und

wobei die Kombinationssteuerungskomponente konfiguriert ist, um die Komponente zur blinden Interferenzunterdrückung oder die Komponente zur nicht blinden Interferenzunterdrückung zu steuern, um das eine oder mehrere Diversity-Signale entsprechend dem Analyseergebnis zu kombinieren, oder beide, die Komponente zur nicht blinden Interferenzunterdrückung und die Komponente zur blinden Interferenzunterdrückung zu verwenden, um das eine oder mehrere Diversity-Signale entsprechend dem Analyseergebnis zu kombinieren.

10. Vorrichtung nach Anspruch 7 oder 8, wobei die Diversity-Kombinationskomponente umfasst: eine Auswahlkomponente, eine erste Kombinationsmechanismuskomponente und eine zweite Kombinationsmechanismuskomponente;

wobei die Auswahlkomponente konfiguriert ist, um die erste Kombinationsmechanismuskomponente oder die zweite Kombinationsmechanismuskomponente auszuwählen, um das eine oder mehrere Diversity-Signale entsprechend dem Analyseergebnis zu kombinieren;

wobei die erste Kombinationsmechanismuskomponente konfiguriert ist, um die blinde Interferenzunterdrückung oder die nicht blinde Interferenzunterdrückung zu verwenden, um das eine oder mehrere Diversity-Signale zu kombinieren; und

wobei die zweite Kombinationsmechanismuskomponente konfiguriert ist, um beide, die nicht blinde Interferenzunterdrückung und die blinde Interferenzunterdrückung zu verwenden, um das eine oder mehrere Diversity-Signale zu kombinieren.

11. Vorrichtung nach Anspruch 7 oder 8, wobei die Proportionsanalysekomponente konfiguriert ist, um zu beurteilen, ob die Proportion der bekannten Interferenz größer ist, als die Proportion der unbekannten Interferenz in den Interferenzen, denen das eine oder mehrere Diversity-Signale unterworfen sind, durch Vergleichen des Schätzfehlers der direkt geschätzten Kovarianzmatrix mit dem Fehler zwischen der theoretischen Kovarianzmatrix und der direkt geschätzten Kovarianzmatrix, oder entsprechend dem Schätzfehler der direkt geschätzten Kovarianzmatrix und dem Fehler zwischen der theoretischen Kovarianzmatrix und der direkt geschätzten Kovarianzmatrix, direkt Berechnen der Proportion der bekannten Interferenzen und der Proportion der unbekannten Interferenzen in den Interferenzen, denen das eine oder mehrere Diversity-Signale unterworfen sind;

die Kombinationssteuerungskomponente konfiguriert ist, um die Komponente zur blinden Interferenzunterdrückung oder die Komponente zur nicht blinden Interferenzunterdrückung zu steuern, um das eine oder mehrere Diversity-Signale entsprechend einem Beurteilungsergebnis der Proportionsanalysekomponente zu kombinieren, oder die Komponente zur blinden Interferenzunterdrückung und die Komponente zur nicht blinden Interferenzunterdrückung zu steuern, um jeweils das eine oder mehrere Diversity-Signale zu kombinieren und ein Ergebnis des Kombinierens des einen oder mehrerer Diversity-Signale unter Verwendung eines nicht blinden Interferenzunterdrückungsempfängers mit einem Ergebnis des Kombinierens des einen oder mehrerer Diversity-Signale unter Verwendung eines blinden Interferenz-Unterdrückungsempfängers entsprechend der Proportion der bekannten Interferenzen und der Proportion der unbekannten Interferenzen in den Interferenzen, denen das eine oder mehrere Diversity-Signale unterworfen sind, zu kombinieren;

die Auswahlkomponente konfiguriert ist, um die erste Kombinationsmechanismuskomponente oder die zweite Kombinationsmechanismuskomponente auszuwählen, um das eine oder mehrere Diversity-Signale entsprechend der Proportion der bekannten Interferenzen und der Proportion der unbekannten Interferenzen in den Interferenzen, denen das eine oder mehrere Diversity-Signale unterworfen sind, zu kombinieren;

die erste Kombinationsmechanismuskomponente konfiguruiert ist, um entsprechend der Proportion der bekannten Interferenzen und der Proportion der unbekannten Interferenzen in den Interferenzen, denen das eine oder mehrere Diversity-Signale unterworfen sind, die blinde Interferenzunterdrückung oder die nicht blinde Interferenzunterdrückung auszuwählen, um das eine oder mehrere Diversity-Signale zu kombinieren; und

die zweite Kombinationsmechanismuskomponente konfiguruiert ist, um die nicht blinde Interferenzunterdrückung und die blinde Interferenzunterdrückung zu verwenden, um jeweils das eine oder mehrere Diversity-Signale zu kombinieren, und entsprechend der Proportion der bekannten Interferenzen und der Proportion der unbekannten Interferenzen in den Interferenzen, denen das eine oder mehrere Diversity-Signale unterworfen sind, ein Ergebnis des Kombinierens des einen oder mehrerer Diversity-Signale unter Verwendung des nicht blinden Interferenz-Unterdrückungsempfängers mit einem Ergebnis des Kombinierens des einen oder mehrerer Diversity-Signale unter Verwendung des blinden Interferenz-Unterdrückungsempfängers zu kombinieren; oder

die Komponente zum Aufbau einer theoretischen Kovarianzmatrix konfiguriert ist, um einen Steuerungskanal in jedem des einen oder mehrerer Diversity-Signale zum Berechnen eines Diversity-Kanalschwundkoeffizienten zu verwenden, und danach den Diversity-Kanalschwundkoeffizienten zum Ableiten der theoretischen Kovarianzmatrix des einen oder mehrerer Diversity-Signale oder der theoretischen Interferenz-plus-Geräusch Kovarianzmatrix des einen oder mehrerer Diversity-Signale zu verwenden, oder ein Pilot-Signal oder ein Referenz-Signal in jedem Diversity-Signal zum Berechnen eines Kanalschwundkoeffizienten an jedem Teilträger eines jeden Diversity-Signals zu verwenden, und danach den Kanalschwundkoeffizienten zum Ableiten der theoretischen Kovarianzmatrix des einen oder mehrerer Diversity-Signale oder der theoretischen Interferenz-plus-Geräusch Kovarianzmatrix des einen oder mehrerer Diversity-Signale zu verwenden.

12. Basisstation, umfassend mindestens zwei Antennen und einen Prozessor;
    wobei jede der mindestens zwei Antennen konfiguriert ist, um ein externes Signal zu empfangen und das empfangene Signal in ein Antennensignal umzuwandeln; und
    wobei der Prozessor konfiguriert ist, um eines oder mehrere Diversity-Signale entsprechend dem einen oder mehreren Antennensignalen, die durch die mindestens zwei Antennen empfangen werden, zu erfassen, die Interferenztypen der Interferenzen, denen das eine oder mehrere Diversity-Signale unterworfen sind, zu analysieren, und entsprechend einem Analyseergebnis einen entsprechenden Interferenz-Unterdrückungsmechanismus auszuwählen, um das eine oder mehrere Diversity-Signale zu kombinieren
    wobei die Basisstation weiter konfiguriert ist, um ein Analysieren der Interferenztypen der Interferenzen, denen das eine oder mehrere Diversity-Signale unterworfen sind, durch die folgenden Schritte durchzuführen:
    Analysieren der Interferenztypen der Interferenzen, denen das eine oder mehrere Diversity-Signale unterworfen sind, entsprechend einer Proportion von Interferenzen, deren Interferenztypen bekannte Interferenz in den Interferenzen sind, und einer Proportion von Interferenzen, deren Interferenztypen unbekannte Interferenz in den Interferenzen sind.

13. Basisstation nach Anspruch 12, wobei der Prozessor konfiguriert ist, um eine blinde Interferenzunterdrückung oder eine nicht blinde Interferenzunterdrückung auszuwählen, um das eine oder mehrere Diversity-Signale entsprechend dem Analyseergebnis zu kombinieren, oder beide, die nicht blinde Interferenzunterdrückung und die blinde Interferenzunterdrückung zu verwenden, um das eine oder mehrere Diversity-Signale entsprechend dem Analyseergebnis zu kombinieren;
    oder
    der Prozessor konfiguriert ist, um entsprechend dem Analyseergebnis einen der folgenden beiden Kombinationsmechanismen auszuwählen, um das Diversity-Signal zu kombinieren, wobei:

der erste Kombinationsmechanismus der beiden Kombinationsmechanismen das Auswählen einer blinden Interferenzunterdrückung oder einer nicht blinden Interferenzunterdrückung ist, um das eine oder mehrere Diversity-Signale zu kombinieren;
der zweite Kombinationsmechanismus der beiden Kombinationsmechanismen das Verwenden beider, der nicht blinden Interferenzunterdrückung und der blinden Interferenzunterdrückung ist, um das eine oder mehrere Diversity-Signale zu kombinieren.

14. Endgerät, umfassend mindestens zwei Antennen und einen Prozessor;
    wobei jede der mindestens zwei Antennen konfiguriert ist, um ein externes Signal zu empfangen und das empfangene Signal in ein Antennensignal umzuwandeln; und
    wobei der Prozessor konfiguriert ist, um eines oder mehrere Diversity-Signale entsprechend dem einen oder mehreren Antennensignalen, die durch die mindestens zwei Antennen empfangen werden, zu erfassen, die Interferenztypen der Interferenzen, denen das eine oder mehrere Diversity-Signale unterworfen sind, zu analysieren, und entsprechend einem Analyseergebnis einen entsprechenden Interferenz-Unterdrückungsmechanismus auszuwählen, um das eine oder mehrere Diversity-Signale zu kombinieren
    wobei das Endgerät weiter konfiguriert ist, um ein Analysieren der Interferenztypen der Interferenzen, denen das eine oder mehrere Diversity-Signale unterworfen sind, durch die folgenden Schritte durchzuführen:
    Analysieren der Interferenztypen der Interferenzen, denen das eine oder mehrere Diversity-Signale unterworfen sind, entsprechend einer Proportion von Interferenzen, deren Interferenztypen bekannte Interferenz in den Interferenzen sind, und einer Proportion von Interferenzen, deren Interferenztypen unbekannte Interferenz in den Interferenzen sind.

15. Endgerät nach Anspruch 14, wobei der Prozessor konfiguriert ist, um eine blinde Interferenzunterdrückung oder eine nicht blinde Interferenzunterdrückung auszuwählen, um das eine oder mehrere Diversity-Signale entsprechend dem Analyseergebnis zu kombinieren, oder beide, die nicht blinde Interferenzunterdrückung und die blinde Interferenzunterdrückung zu verwenden, um das eine oder mehrere Diversity-Signale entsprechend dem Analyseergebnis zu kombinieren;
    oder
    der Prozessor konfiguriert ist, um entsprechend dem Analyseergebnis einen der folgenden beiden Kombinationsmechanismen auszuwählen, um das eine oder mehrere Diversity-Signale zu kombinieren, wobei:

der erste Kombinationsmechanismus der beiden Kombinationsmechanismus das Auswählen einer blinden Interferenzunterdrückung oder einer nicht blinden Interferenzunterdrückung ist, um das eine oder mehrere Diversity-Signale zu kombinieren;

der zweite Kombinationsmechanismus der beiden Kombinationsmechanismus das Verwenden beider, der nicht blinden Interferenzunterdrückung und der blinden Interferenzunterdrückung ist, um das eine oder mehrere Diversity-Signale zu kombinieren.

**Revendications**

1.  Procédé de rejet de interférence, comprenant :

    l'acquisition d'un ou plusieurs signaux de diversité, et l'analyse de types de interférence de interférences auxquels les un ou plusieurs signaux de diversité sont soumis (201) ; et
    la sélection, en fonction d'un résultat d'analyse, d'un mécanisme de rejet de interférence correspondant pour combiner les un ou plusieurs signaux de diversité (202) ;
    **caractérisé en ce que** l'analyse des types de interférence des interférences auxquels les un ou plusieurs signaux de diversité sont soumis (201) comprend : l'analyse des types de interférence des interférences auxquels les un ou plusieurs signaux de diversité sont soumis en fonction d'une proportion de interférences dont des types de interférence sont un interférence connu dans les interférences et d'une proportion de interférences dont des types de interférence sont un interférence inconnu dans les interférences.

2.  Procédé selon la revendication 1, dans lequel l'analyse des types de interférence des interférences auxquels les un ou plusieurs signaux de diversité sont soumis en fonction de la proportion des interférences dont des types de interférence sont un interférence connu dans les interférences et d'une proportion de interférences dont des types de interférence sont un interférence inconnu dans les interférences comprend :

    l'estimation directe d'une matrice de covariance des un ou plusieurs signaux de diversité ou l'estimation directe d'une matrice de covariance de interférence plus bruit des un ou plusieurs signaux de diversité ;
    la construction d'une matrice de covariance théorique des un ou plusieurs signaux de diversité ou d'une matrice de covariance de interférence plus bruit théorique des un ou plusieurs signaux de diversité ;
le calcul d'une erreur d'estimation de la matrice de covariance estimée directement, et le calcul d'une erreur entre la matrice de covariance théorique et la matrice de covariance estimée directement ; et
l'analyse, en fonction de l'erreur d'estimation de la matrice de covariance estimée directement et de l'erreur entre la matrice de covariance théorique et la matrice de covariance estimée directement, des types de interférence des interférences auxquels les un ou plusieurs signaux de diversité sont soumis, en fonction de la proportion des interférences dont des types de interférence sont un interférence connu dans les interférences et d'une proportion de interférences dont des types de interférence sont un interférence inconnu dans les interférences.

3.  Procédé selon la revendication 1 ou 2, dans lequel la sélection, en fonction du résultat d'analyse, du mécanisme de rejet de interférence correspondant pour combiner les un ou plusieurs signaux de diversité (202) comprend :

    la sélection, en fonction du résultat d'analyse, d'un rejet de interférence aveugle ou d'un rejet de interférence non aveugle pour combiner les un ou plusieurs signaux de diversité ;
    ou
    l'utilisation, en fonction du résultat d'analyse, à la fois d'un rejet de interférence non aveugle et d'un rejet de interférence aveugle pour combiner les un ou plusieurs signaux de diversité.

4.  Procédé selon la revendication 1 ou 2, dans lequel la sélection, en fonction du résultat d'analyse, du mécanisme de rejet de interférence correspondant pour combiner les un ou plusieurs signaux de diversité (202) comprend :

    la sélection, en fonction du résultat d'analyse, de l'un de deux mécanismes de combinaison pour combiner les un ou plusieurs signaux de diversité, dans lequel
    le premier mécanisme de combinaison des deux mécanismes de combinaison consiste à sélectionner un rejet de interférence aveugle ou un rejet de interférence non aveugle pour combiner les un ou plusieurs signaux de diversité ; et
    le deuxième mécanisme de combinaison des deux mécanismes de combinaison consiste à utiliser à la fois le rejet de interférence non aveugle et le rejet de interférence aveugle pour combiner les un ou plusieurs signaux de diversité.

**5.** Procédé selon la revendication 2, dans lequel l'analyse, en fonction de l'erreur d'estimation de la matrice de covariance estimée directement et de l'erreur entre la matrice de covariance théorique et la matrice de covariance estimée directement, des types de interférence des interférences auxquels les un ou plusieurs signaux de diversité sont soumis, en fonction de la proportion des interférences dont des types de interférence sont un interférence connu dans les interférences et d'une proportion de interférences dont des types de interférence sont un interférence inconnu dans les interférences (504) comprend :

le fait de juger si la proportion des interférences connus est supérieure à la proportion des interférences inconnus dans les interférences auxquels les un ou plusieurs signaux de diversité sont soumis, par la comparaison de l'erreur d'estimation de la matrice de covariance estimée directement à l'erreur entre la matrice de covariance théorique et la matrice de covariance estimée directement ; ou
en fonction de l'erreur d'estimation de la matrice de covariance estimée directement et de l'erreur entre la matrice de covariance théorique et la matrice de covariance estimée directement, le calcul direct de la proportion des interférences connus et de la proportion des interférences inconnus dans les interférences auxquels les un ou plusieurs signaux de diversité sont soumis ;
en fonction du résultat d'analyse, l'utilisation du rejet de interférence aveugle ou du rejet de interférence non aveugle pour combiner les un ou plusieurs signaux de diversité comprend : en fonction d'un résultat de jugement, l'utilisation du rejet de interférence non aveugle ou du rejet de interférence aveugle pour combiner les un ou plusieurs signaux de diversité ;
l'utilisation, en fonction du résultat d'analyse, à la fois du rejet de interférence non aveugle et du rejet de interférence aveugle pour combiner les un ou plusieurs signaux de diversité comprend : l'utilisation du rejet de interférence non aveugle et du rejet de interférence aveugle pour combiner respectivement les un ou plusieurs signaux de diversité ; la combinaison, en fonction de la proportion des interférences connus et de la proportion des interférences inconnus dans les interférences auxquels les un ou plusieurs signaux de diversité sont soumis, d'un résultat de la combinaison des un ou plusieurs signaux de diversité en utilisant le récepteur de rejet de interférence non aveugle et d'un résultat de la combinaison des un ou plusieurs signaux de diversité en utilisant le récepteur de rejet de interférence aveugle pour combiner des résultats des un ou plusieurs signaux de diversité ;
la sélection, en fonction du résultat d'analyse, de l'un des deux mécanismes de combinaison suivants pour combiner les un ou plusieurs signaux de diversité comprend :

la sélection, en fonction de la proportion des interférences connus et de la proportion des interférences inconnus dans les interférences auxquels les un ou plusieurs signaux de diversité sont soumis, de l'un des deux mécanismes de combinaison suivants pour combiner les un ou plusieurs signaux de diversité, dans lequel
le premier mécanisme de combinaison des deux mécanismes de combinaison consiste à sélectionner, en fonction de la proportion des interférences connus et de la proportion des interférences inconnus dans les interférences auxquels les un ou plusieurs signaux de diversité sont soumis, du rejet de interférence aveugle ou du rejet de interférence non aveugle pour combiner les un ou plusieurs signaux de diversité ; et
le deuxième mécanisme de combinaison des deux mécanismes de combinaison consiste à utiliser le rejet de interférence non aveugle et le rejet de interférence aveugle pour combiner respectivement les un ou plusieurs signaux de diversité ; et la combinaison, en fonction de la proportion des interférences connus et de la proportion des interférences inconnus dans les interférences auxquels les un ou plusieurs signaux de diversité sont soumis, d'un résultat de la combinaison des un ou plusieurs signaux de diversité en utilisant le récepteur de rejet de interférence non aveugle et d'un résultat de la combinaison des un ou plusieurs signaux de diversité en utilisant le récepteur de rejet de interférence aveugle pour combiner des résultats des un ou plusieurs signaux de diversité.

**6.** Procédé selon la revendication 2, dans lequel la construction de la matrice de covariance théorique des un ou plusieurs signaux de diversité ou de la matrice de covariance de interférence plus bruit théorique des un ou plusieurs signaux de diversité comprend :

l'utilisation d'un canal de commande dans chacun des un ou plusieurs signaux de diversité pour calculer un coefficient d'évanouissement de canal de diversité ;
l'utilisation du coefficient d'évanouissement de canal de diversité pour déduire la matrice de covariance théorique des un ou plusieurs signaux de diversité ou la matrice de covariance de interférence plus bruit théorique des un ou plusieurs signaux de diversité ;
ou
l'utilisation d'un signal pilote ou d'un signal de référence dans chaque signal de diversité pour calculer un coefficient d'évanouissement de canal sur chaque sous-porteuse de chaque signal de diversité ;
l'utilisation du coefficient d'évanouissement de canal pour déduire la matrice de covariance théorique des un ou plusieurs signaux de diversité ou la matrice de covariance de interférence plus bruit théorique des un ou plusieurs signaux de diversité.

7. Dispositif de rejet de interférence, comprenant : un composant de réception de diversité, un composant d'analyse de interférence et un composant de combinaison de diversité ;
le composant de réception de diversité est configuré pour l'acquisition d'un ou plusieurs signaux de diversité ;
le composant d'analyse de interférence est configuré pour l'analyse des types de interférence de interférences auxquels les un ou plusieurs signaux de diversité sont soumis ; et
le composant de combinaison de diversité est configuré pour, en fonction d'un résultat d'analyse du composant d'analyse de interférence, la sélection d'un mécanisme de rejet de interférence correspondant pour combiner les un ou plusieurs signaux de diversité ;
**caractérisé en ce que** le composant d'analyse de interférence est configuré pour effectuer l'analyse en fonction d'une proportion des interférences dont des types de interférence sont un interférence connu et un interférence inconnu dans les interférences auxquels les un ou plusieurs signaux de diversité sont soumis.

8. Dispositif selon la revendication 7, dans lequel le composant d'analyse de interférence comprend :

un composant d'estimation de matrice de covariance, un composant de construction de matrice de covariance théorique, un composant de calcul d'erreur, un composant de comparaison et un composant d'analyse de proportion ;
le composant d'estimation de matrice de covariance est configuré pour l'estimation directe d'une matrice de covariance des un ou plusieurs signaux de diversité ou l'estimation directe d'une matrice de covariance de interférence plus bruit des un ou plusieurs signaux de diversité ;
le composant de construction de matrice de covariance théorique est configuré pour la construction d'une matrice de covariance théorique des un ou plusieurs signaux de diversité ou d'une matrice de covariance de interférence plus bruit théorique des un ou plusieurs signaux de diversité ;
le composant de calcul d'erreur est configuré pour le calcul d'une erreur d'estimation de la matrice de covariance estimée directement, et le calcul d'une erreur entre la matrice de covariance théorique et la matrice de covariance estimée directement ;
le composant de comparaison est configuré pour la comparaison de l'erreur d'estimation de la matrice de covariance estimée directement à l'erreur entre la matrice de covariance théorique et la matrice de covariance estimée directement ; et
le composant d'analyse de proportion est configuré pour, en fonction de l'erreur d'estimation de la matrice de covariance estimée directement et de l'erreur entre la matrice de covariance théorique et la matrice de covariance estimée directement, l'analyse des types de interférence des interférences auxquels les un ou plusieurs signaux de diversité sont soumis, en fonction de la proportion des interférences dont des types de interférence sont un interférence connu dans les interférences et d'une proportion de interférences dont des types de interférence sont un interférence inconnu dans les interférences.

9. Dispositif selon la revendication 7 ou 8, dans lequel le composant de combinaison de diversité comprend : un composant de rejet de interférence aveugle, un composant de rejet de interférence non aveugle et un composant de commande de combinaison ;
le composant de rejet de interférence aveugle est configuré pour l'utilisation d'une manière de rejet de interférence aveugle pour combiner les un ou plusieurs signaux de diversité sous le contrôle du composant de commande de combinaison ;
le composant de rejet de interférence non aveugle est configuré pour l'utilisation d'une manière de rejet de interférence non aveugle pour combiner les un ou plusieurs signaux de diversité sous le contrôle du composant de commande de combinaison ; et
le composant de commande de combinaison est configuré pour commander au composant de rejet de interférence aveugle ou au composant de rejet de interférence non aveugle d'effectuer la combinaison des un ou plusieurs signaux de diversité en fonction du résultat d'analyse, ou l'utilisation à la fois du composant de rejet de interférence non aveugle et du composant de rejet de interférence aveugle pour combiner les un ou plusieurs signaux de diversité en fonction du résultat d'analyse.

10. Dispositif selon la revendication 7 ou 8, dans lequel le composant de combinaison de diversité comprend : un composant de sélection, un composant de premier mécanisme de combinaison et un composant de deuxième mécanisme de combinaison ;

le composant de sélection est configuré pour la sélection du composant de premier mécanisme de combinaison ou du composant de deuxième mécanisme de combinaison pour combiner les un ou plusieurs signaux de diversité en fonction du résultat d'analyse ;

le composant de premier mécanisme de combinaison est configuré pour l'utilisation du rejet de interférence aveugle ou du rejet de interférence non aveugle pour combiner les un ou plusieurs signaux de diversité ; et

le composant de deuxième mécanisme de combinaison est configuré pour l'utilisation à la fois du rejet de interférence non aveugle et du rejet de interférence aveugle pour combiner les un ou plusieurs signaux de diversité.

11. Dispositif selon la revendication 7 ou 8, dans lequel le composant d'analyse de proportion est configuré pour juger si la proportion des interférences connus est supérieure à la proportion des interférences inconnus dans les interférences auxquels les un ou plusieurs signaux de diversité sont soumis, par la comparaison de l'erreur d'estimation de la matrice de covariance estimée directement à l'erreur entre la matrice de covariance théorique et la matrice de covariance estimée directement, ou en fonction de l'erreur d'estimation de la matrice de covariance estimée directement et de l'erreur entre la matrice de covariance théorique et la matrice de covariance estimée directement, le calcul direct de la proportion des interférences connus et de la proportion des interférences inconnus dans les interférences auxquels les un ou plusieurs signaux de diversité sont soumis ;

le composant de commande de combinaison est configuré pour commander au composant de rejet de interférence aveugle ou au composant de rejet de interférence non aveugle d'effectuer la combinaison des un ou plusieurs signaux de diversité en fonction d'un résultat de jugement du composant d'analyse de proportion, ou commander au composant de rejet de interférence aveugle et au composant de rejet de interférence non aveugle d'effectuer respectivement la combinaison des un ou plusieurs signaux de diversité, et la combinaison d'un résultat de la combinaison des un ou plusieurs signaux de diversité en utilisant un récepteur de rejet de interférence non aveugle avec un résultat de la combinaison des un ou plusieurs signaux de diversité en utilisant un récepteur de rejet de interférence aveugle en fonction de la proportion des interférences connus et de la proportion des interférences inconnus dans les interférences auxquels les un ou plusieurs signaux de diversité sont soumis ;

le composant de sélection est configuré pour la sélection du composant de premier mécanisme de combinaison ou du composant de deuxième mécanisme de combinaison pour la combinaison des un ou plusieurs signaux de diversité en fonction de la proportion des interférences connus et de la proportion des interférences inconnus dans les interférences auxquels les un ou plusieurs signaux de diversité sont soumis ;

le composant de premier mécanisme de combinaison est configuré pour, en fonction de la proportion des interférences connus et de la proportion des interférences inconnus dans les interférences auxquels les un ou plusieurs signaux de diversité sont soumis, la sélection du rejet de interférence aveugle ou du rejet de interférence non aveugle pour combiner les un ou plusieurs signaux de diversité ; et

le composant de deuxième mécanisme de combinaison est configuré pour l'utilisation du rejet de interférence non aveugle et du rejet de interférence aveugle pour combiner respectivement les un ou plusieurs signaux de diversité, et, en fonction de la proportion des interférences connus et de la proportion des interférences inconnus dans les interférences auxquels les un ou plusieurs signaux de diversité sont soumis, la combinaison d'un résultat de la combinaison des un ou plusieurs signaux de diversité en utilisant le récepteur de rejet de interférence non aveugle et d'un résultat de la combinaison des un ou plusieurs signaux de diversité en utilisant le récepteur de rejet de interférence aveugle ;

ou

le composant de construction de matrice de covariance théorique est configuré pour l'utilisation d'un canal de commande dans chacun des un ou plusieurs signaux de diversité pour calculer un coefficient d'évanouissement de canal de diversité, puis l'utilisation du coefficient d'évanouissement de canal de diversité pour déduire la matrice de covariance théorique des un ou plusieurs signaux de diversité ou la matrice de covariance de interférence plus bruit théorique des un ou plusieurs signaux de diversité, ou l'utilisation d'un signal pilote ou d'un signal de référence dans chaque signal de diversité pour calculer un coefficient d'évanouissement de canal sur chaque sous-porteuse de chaque signal de diversité, puis l'utilisation du coefficient d'évanouissement de canal pour déduire la matrice de covariance théorique des un ou plusieurs signaux de diversité ou la matrice de covariance de interférence plus bruit théorique des un ou plusieurs signaux de diversité.

12. Station de base, comprenant au moins deux antennes et un processeur ;

chacune des au moins deux antennes est configurée pour la réception d'un signal externe et la conversion du signal reçu en un signal d'antenne ; et

le processeur est configuré pour l'acquisition d'un ou plusieurs signaux de diversité en fonction d'un ou plusieurs signaux d'antenne reçus par les au moins deux antennes, l'analyse des types de interférence de interférences auxquels les un ou plusieurs signaux de diversité sont soumis, et, en fonction d'un résultat d'analyse, la sélection d'un mécanisme de rejet de interférence correspondant pour combiner les un ou plusieurs signaux de diversité,

dans laquelle la station de base est en outre configurée pour effectuer l'analyse des types de interférence des interférences auxquels les un ou plusieurs signaux de diversité sont soumis par les étapes suivantes :

l'analyse des types de interférence des interférences auxquels les un ou plusieurs signaux de diversité sont soumis en fonction d'une proportion des interférences dont des types de interférence sont des interférences connus et d'une proportion des interférences dont des types de interférence sont des interférences inconnus dans les interférences.

13. Station de base selon la revendication 12, dans laquelle le processeur est configuré pour la sélection d'un rejet de interférence aveugle ou d'un rejet de interférence non aveugle pour combiner les un ou plusieurs signaux de diversité en fonction du résultat d'analyse, ou l'utilisation à la fois du rejet de interférence non aveugle et du rejet de interférence aveugle pour combiner les un ou plusieurs signaux de diversité en fonction du résultat d'analyse ;
ou
le processeur est configuré pour, en fonction du résultat d'analyse, la sélection de l'un de deux mécanismes de combinaison suivants pour combiner les un ou plusieurs signaux de diversité, dans laquelle :

le premier mécanisme de combinaison des deux mécanismes de combinaison consiste à sélectionner un rejet de interférence aveugle ou un rejet de interférence non aveugle pour combiner les un ou plusieurs signaux de diversité ;
le deuxième mécanisme de combinaison des deux mécanismes de combinaison consiste à utiliser à la fois le rejet de interférence non aveugle et le rejet de interférence aveugle pour combiner les un ou plusieurs signaux de diversité.

14. Terminal, comprenant au moins deux antennes et un processeur ;
chacune des au moins deux antennes est configurée pour la réception d'un signal externe et la conversion du signal reçu en un signal d'antenne ; et
le processeur est configuré pour l'acquisition d'un ou plusieurs signaux de diversité en fonction d'un ou plusieurs signaux d'antenne reçus par les au moins deux antennes, l'analyse des types de interférence de interférences auxquels les un ou plusieurs signaux de diversité sont soumis, et, en fonction d'un résultat d'analyse, la sélection d'un mécanisme de rejet de interférence correspondant pour combiner les un ou plusieurs signaux de diversité,
dans lequel le terminal est en outre configuré pour effectuer l'analyse des types de interférence des interférences auxquels les un ou plusieurs signaux de diversité sont soumis par les étapes suivantes :
l'analyse des types de interférence des interférences auxquels les un ou plusieurs signaux de diversité sont soumis, en fonction d'une proportion des interférences dont des types de interférence sont des interférences connus et d'une proportion des interférences dont des types de interférence sont des interférences inconnus dans les interférences.

15. Terminal selon la revendication 14, dans lequel le processeur est configuré pour la sélection d'un rejet de interférence aveugle ou d'un rejet de interférence non aveugle pour combiner les un ou plusieurs signaux de diversité en fonction du résultat d'analyse, ou l'utilisation à la fois d'un rejet de interférence non aveugle et d'un rejet de interférence aveugle pour combiner les un ou plusieurs signaux de diversité en fonction du résultat d'analyse ;
ou
le processeur est configuré pour, en fonction du résultat d'analyse, la sélection de l'un de deux mécanismes de combinaison suivants pour combiner les un ou plusieurs signaux de diversité, dans lequel :

le premier mécanisme de combinaison des deux mécanismes de combinaison consiste à sélectionner un rejet de interférence aveugle ou un rejet de interférence non aveugle pour combiner les un ou plusieurs signaux de diversité ;
le deuxième mécanisme de combinaison des deux mécanismes de combinaison consiste à utiliser à la fois le rejet de interférence non aveugle et le rejet de interférence aveugle pour combiner les un ou plusieurs signaux de diversité.

NodeB2

UE3

NodeB1

UE2

UE1

## Fig. 1

201

One or more diversity signals are acquired, and the interference types of interferences, to which the one or more diversity signals are subject, are analyzed

202

According to an analysis result, a corresponding interference rejection mechanism is selected to combine the one or more diversity signals

## Fig. 2

Non-blind
interferenc
e rejection

Blind
interferenc
e rejection

Interferenc
e analyzer

Decision/
Decode

**Fig. 3**

Non-blind
interferenc
e rejection

Blind
interferenc
e rejection

Interferenc
e analyzer

1-/

/

Decision/
Decode

**Fig. 4**

501

A covariance matrix of the one or more diversity signals is directly estimated or a interference-plus-noise covariance matrix of the one or more diversity signals is directly estimated

502

A theoretical covariance matrix of the one or more diversity signals or a theoretical interference-plus-noise covariance matrix of the one or more diversity signals is constructed

503

An estimation error of the directly estimated covariance matrix is computed, and an error between the theoretical covariance matrix and the directly estimated covariance matrix is computed

504

According to the estimation error of the directly estimated covariance matrix and the error between the theoretical covariance matrix and the directly estimated covariance matrix, the proportion of the interferences whose interference types are known interference and unknown interference in the interferences, to which the one or more diversity signals are subject, is analyzed

## Fig. 5

| Known interference information is used for constructing the covariance matrix | $\mathbf{w} = \mathbf{R}^{-1}\mathbf{h}$ |
|---|---|

| The received signal is used for directly estimating the covariance matrix | $\tilde{\mathbf{w}} = \tilde{\mathbf{R}}^{-1}\mathbf{h}$ |
|---|---|

## Fig. 6

RAKE finger

Diversity
reception symbol

Multipath
searching

Multipath
distribution

**Fig. 7**

Serial-to-parallel conversion

Time-frequency transformation

Serial-to-parallel conversion

Time-frequency transformation

Subcarrier extraction

Diversity reception symbol

**Fig. 8**

Multipath searching and
multipath distribution are
performed on an antenna
signal — 901

The RAKE finger performs
dispreading and
descrambling on each
multipath to realize diversity
reception, and provides
multipath information, a
channel fading coefficient,
etc. — 902

Interference-plus-noise of
each diversity reception
signal is computed — 903

The interference-
plus-noise covariance
matrix is constructed
according to
information of a
demodulation user
and an interference
user — 906

The interference-plus-noise
covariance matrix of the
diversity signal is estimated — 904

The estimation error is
computed $\xi$ — 905

The error between the
constructed covariance
matrix and the estimated
covariance matrix is
computed $\psi$ — 907

$\xi < \psi$ — 908

Yes                    No — 911

A combining weight of
the blind interference
rejection is computed — 909

A combining weight of
the non-blind
interference rejection
is computed

The diversity signal is
combined and
decoded — 910

The diversity signal is
combined and
decoded — 912

**Fig. 9**

**Fig. 10**

**Fig. 11**

**Fig. 12**

A serial-to-parallel conversion is performed on the antenna signal, a transformation to a frequency domain is performed through the FFT, and the symbols at the same subcarrier are extracted to construct the space diversity signal; meanwhile, the channel estimation of the subcarrier and other information are provided

131

The covariance matrix of the diversity reception signal is estimated

132

The covariance matrix of the reception signal is constructed according to the information of demodulation user and the interference user

134

The estimation error is computed

133

The error between the constructed covariance matrix and the estimated covariance matrix is computed

135

The two errors are compared, and an interference type indication is computed

136

The combination proportion of two receivers is computed

137

The combining weight of the blind interference rejection is computed

138

The combining weight of the non-blind interference rejection is computed

140

The diversity signal is combined

139

The diversity signal is combined

141

Results of the blind interference rejection and the non-blind interference rejection are combined according to the proportion

142

## Fig. 13

```
┌─────────────────────┐                    ┌─────────────────────┐
│ Diversity receiving │                    │ Diversity combining │
│     component       │          ┌────────▶│     component       │
└─────────────────────┘          │         └─────────────────────┘
                                 │                    ▲
                                 │                    │
                                 │         ┌─────────────────────┐
                                 │         │    Interference     │
                                 └────────▶│     analyzing       │
                                           │     component       │
                                           └─────────────────────┘
```

**Fig. 14**

```
                        ┌──────────────────────────────────────────────────┐
                        │         Diversity combining component            │
                        │    ┌─────────────────────┐                       │
┌─────────────────────┐ │    │  Blind interference │                       │
│ Diversity receiving │ │ ┌─▶│ rejection component │──┐   ┌──────────────┐ │
│     component       │─┼─┤  └─────────────────────┘  ├──▶│  Combination │ │
└─────────────────────┘ │ │  ┌─────────────────────┐  │   │   control    │ │
                        │ │  │      Non-blind      │  │   │  component   │ │
                        │ └─▶│    interference     │──┘   └──────────────┘ │
                        │    │ rejection component │           ▲           │
                        │    └─────────────────────┘           │           │
                        └──────────────────────────────────────┼──────────┘
                             │   ┌─────────────────────┐        │
                             │   │    Interference     │        │
                             └──▶│     analyzing       │────────┘
                                 │     component       │
                                 └─────────────────────┘
```

**Fig. 15**

**Fig. 16**

**Fig. 17**

**Fig. 18**

**Fig. 19**

**EP 3 021 495 B1**

## REFERENCES CITED IN THE DESCRIPTION

### Patent documents cited in the description

- US 2006153283 A1
- US 2007127608 A1
- US 2012108194 A1
- US 6128355 A
- US 2013163529 A1